(19) Europäisches Patentamt
European Patent Office
Office européen des brevets

(11) **EP 3 930 178 B1**

(12) **EUROPÄISCHE PATENTSCHRIFT**

(45) Veröffentlichungstag und Bekanntmachung des Hinweises auf die Patenterteilung:
**26.03.2025 Patentblatt 2025/13**

(21) Anmeldenummer: **21180719.3**

(22) Anmeldetag: **22.06.2021**

(51) Internationale Patentklassifikation (IPC):
*H02P 6/18* (2016.01)    *H02P 23/00* (2016.01)
*H02P 27/08* (2006.01)    *H02P 21/24* (2016.01)
*H02P 21/00* (2016.01)

(52) Gemeinsame Patentklassifikation (CPC):
**H02P 6/183; H02P 6/186; H02P 21/0025;**
**H02P 21/24; H02P 23/0031; H02P 27/08**

(54) **VERFAHREN ZUR REGELUNG EINER ELEKTRISCHEN DREHSTROMMASCHINE SOWIE DREHSTROMMASCHINENSYSTEM FÜR EIN SOLCHES VERFAHREN**

METHOD FOR CONTROLLING AN ELECTRIC THREE-PHASE MACHINE AND THREE-PHASE MACHINE SYSTEM FOR SUCH A METHOD

PROCÉDÉ DE RÉGULATION D'UNE MACHINE ÉLECTRIQUE À COURANT TRIPHASÉ AINSI QUE SYSTÈME DE MACHINE À COURANT TRIPHASÉ POUR UN TEL PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.06.2020 EP 20181490**

(43) Veröffentlichungstag der Anmeldung:
**29.12.2021 Patentblatt 2021/52**

(73) Patentinhaber:
• **ALSTOM Holdings**
**93400 Saint-Ouen-sur-Seine (FR)**
• **Technische Universität Wien**
**1040 Wien (AT)**

(72) Erfinder:
• **WOLBANK, Thomas**
**1050 Wien (AT)**
• **VOGELSBERGER, Markus**
**6152 Trins (AT)**
• **BAZANT, Martin**
**8708 Maennedorf (CH)**

(74) Vertreter: **SONN Patentanwälte GmbH & Co KG**
**Riemergasse 14**
**1010 Wien (AT)**

(56) Entgegenhaltungen:
• **WOLBANK T M ET AL: "Comparison of inherent saliency tracking methods for zero speed sensorless control of standard induction machines", ELECTRIC MACHINES AND DRIVES CONFERENCE, 2009. IEMDC '09. IEEE INTERNATIONAL, IEEE, PISCATAWAY, NJ, USA, 3 May 2009 (2009-05-03), pages 1258 - 1263, XP031475932, ISBN: 978-1-4244-4251-5**
• **METWALY MOHAMED K ET AL: "Slotting Saliency Extraction For Sensorless Torque Control of Standard Induction Machines", IEEE TRANSACTIONS ON ENERGY CONVERSION, IEEE SERVICE CENTER, PISCATAWAY, NJ, US, vol. 33, no. 1, 1 March 2018 (2018-03-01), pages 68 - 77, XP011677884, ISSN: 0885-8969, [retrieved on 20180215], DOI: 10.1109/TEC.2017.2726998**

# EP 3 930 178 B1

## Beschreibung

Die Erfindung betrifft ein Verfahren zur Regelung einer elektrischen Drehstrommaschine, insbesondere einer Asynchronmaschine, mit einem Rotor, einem Stator und zumindest zwei Strängen, wobei zumindest ein elektrisches Signal, insbesondere ein Spannungssignal, an zumindest einem Strang, vorzugsweise allen Strängen, der Drehstrommaschine aufgeschaltet wird und ein elektrischer Signalverlauf, insbesondere ein Stromverlauf, in dem zumindest einen Strang gemessen oder ermittelt wird, wobei ein durch Nutungseffekte und magnetische Sättigungseffekte in der Drehstrommaschine hervorgerufener Intermodulationssignalanteil, der aus dem in dem zumindest einen Strang gemessenen oder ermittelten Signalverlauf ermittelt wird, zur Regelung der Drehstrommaschine verwendet wird, wobei der Intermodulationssignalanteil durch Eliminierung von anderen Signalanteilen extrahiert wird.

Des Weiteren betrifft die Erfindung ein Drehstrommaschinensystem zur Ausführung eines solchen Verfahrens.

Bei modernen Regelungsverfahren für Drehstrommaschinen ist häufig die Kenntnis der Winkellage des Rotors notwendig. Um diese Informationen zu erhalten, können beispielsweise Sensoren, wie Inkrementaldrehgeber, Absolutwertdrehgeber oder Resolver eingesetzt werden, die auf den verschiedensten physikalischen Prinzipien basieren können. Nachteilig bei allen Arten von Drehgebern sind jedoch die zusätzlichen Kosten. Zudem besitzen Drehgeber nur eine begrenzte Lebensdauer, die oftmals geringer als die geplante Lebensdauer der Drehstrommaschine ist. Ein vermeintlicher Defekt eines Drehstromantriebs ist häufig auf den Ausfall eines derartigen Sensors zurückzuführen. Ausfälle und Stillstandszeiten, beispielsweise von defekten Zügen auf Bahnstrecken, können allerdings mit beträchtlichem Aufwand und hohen Kosten verbunden sein und sind daher nach Möglichkeit zu vermeiden.

Um den Einsatz derartiger Sensoren bei Drehstrommaschinen bzw. Drehstromantrieben zu vermeiden, wurden daher sogenannte sensorlose Regelungsverfahren entwickelt, bei denen die Winkellage der Flussverkettung ohne Zuhilfenahme eines Sensors für den Winkel bzw. die Drehzahl des Rotors aus den Verläufen der elektrischen Größen in der Drehstrommaschine bestimmt werden kann. Bei diesen Verfahren werden häufig mit Hilfe eines Umrichters Anregungssignale aufgeschaltet und die Reaktionssignale des Motors in Folge der Anregungssignale gemessen. Durch eine entsprechende Auswertung kann auf die Winkellage bzw. die Drehzahl des Rotors geschlossen werden.

Sensorlose Regelungsverfahren nutzen dabei die Tatsache, dass Drehstrommaschinen bauartbedingte oder im Betrieb durch elektrische bzw. magnetische Effekte hervorgerufene Asymmetrien aufweisen, die sich zeitlich und örtlich verändern können. Die Veränderungen der Asymmetrien verursachen in der Regel Induktivitätsänderungen und können daher beispielsweise über einen veränderten Stromanstieg detektiert werden. In WO 99/39430 A1 wird ein sensorloses Regelungsverfahren beschrieben.

Ein Beispiel für eine bauartbedingte Asymmetrie ist der Rotor einer permanentmagneterregten Synchronmaschine (PSM), welcher an bestimmten Stellen Permanentmagnete aufweist, die eine geringere relative Permeabilität als die umliegenden Bereiche mit Eisen besitzen und daher den magnetischen Widerstand im Bereich der Permanentmagnete gegenüber Bereichen mit Eisen vergrößern. Wenn sich der Rotor der PSM dreht, wird der magnetische Widerstand entlang des Umfangs des Luftspaltes zeitlich und örtlich variiert, was sich in Induktivitätsänderungen manifestiert.

Ein Beispiel für eine elektrische bzw. magnetische Asymmetrie sind lokale Sättigungserscheinungen der magnetischen Flusspfade in der Drehstrommaschine.

Je schwächer die rotorbezogenen Asymmetrien einer Drehstrommaschine ausgeprägt sind, desto schwieriger lässt sich eine Veränderung des Drehwinkels eines Rotors ohne Sensoren feststellen. Besonders schwierig ist es, die Winkellage eines Rotors einer Asynchronmaschine sensorlos (d.h. ohne Sensoren der oben beschriebenen Art, wie zum Beispiel Inkrementaldrehgeber) festzustellen, da Asynchronmaschinen, insbesondere im Vergleich zu Synchronmaschinen, geringere Asymmetrien aufweisen. Bei Asynchronmaschinen wird in der Regel ein in den gemessenen Stromverläufen enthaltener Nutungssignalanteil von anderen Signalanteilen isoliert und ausgewertet, oder das Sättigungssignal herangezogen. Der Nutungssignalanteil wird durch die an der Nutung des Stators vorbeidrehende Nutung des Rotors und die damit verbundene Induktivitätsänderung hervorgerufen. Da die Induktivitätsänderungen, die durch die vorbeidrehende Nutung entsteht, relativ gering sind, ist der Nutungssignalanteil in der Regel klein und kann daher, je nach Betriebszustand und Bauweise der Asynchronmaschine, nur schwer identifiziert und von anderen Signalanteilen getrennt werden. Insbesondere bei zunehmender Belastung der Asynchronmaschine kann der Nutungssignalanteil nur schwer oder gar nicht von anderen Signalanteilen unterschieden werden.

Aus dem Stand der Technik ist die Bestimmung des Nutungssignalanteils durch Eliminierung des Intermodulationssignalanteils und des Sättigungssignalanteils beispielsweise bekannt aus:

Wolbank T.M. et al.: "Comparison of inherent saliency tracking methods for zero speed sensorless control of standard induction machines", ELECTRIC MACHINES AND DRIVES CONFERENCE, 2009. IEMDC , 09. IEEE INTERNATIONAL, IEEE, PISCATAWAY, NJ, USA, 3. Mai 2009 (2009-05-03), Seiten 1258-1263, XP031475932, ISBN: 978-1-4244-4251-5
und

Metwaly Mohamed K. et al.: "Slotting Saliency Extraction For Sensorless Torque Control of Standard Induction Machines", IEEE TRANSACTIONS ON ENERGY CONVERSION, IEEE_ SERVICE CENTER, PISCATAWAY, NJ, US, Bd. 33, Nr. 1, 1. März 2018 (2018-03-01 ), Seiten 68-77, XP011677884, ISSN: 0885-8969, DOI: 10.1109/TEC.2017.2726998.

Im Lichte dieser Ausführungen ist es daher Aufgabe der vorliegenden Erfindung, die Nachteile des Standes der Technik zu lindern oder gar gänzlich zu beseitigen. Insbesondere ist es Aufgabe der vorliegenden Erfindung, ein Verfahren der eingangs erwähnten Art zur Verfügung zu stellen, bei dem eine Winkellage und/oder eine Drehzahl eines Rotors einer Drehstrommaschine, insbesondere einer Asynchronmaschine, auf verbesserte Weise und über einen weiten Drehzahl- und Belastungsbereich aus dem zumindest einen elektrischen Signalverlauf ermittelt werden kann.

Gelöst wird diese Aufgabe durch ein Verfahren mit den Merkmalen des Anspruches 1. Erfindungsgemäß ist vorgesehen, dass bei einem Verfahren der eingangs erwähnten Art aus einem Winkel des Intermodulationssignalanteils ein Nutungswinkel ermittelt wird, indem der Winkel des Intermodulationssignalanteils mit einem Winkel eines im zumindest einen Signalverlauf enthaltenen Sättigungssignalanteils durch die Berechnungsvorschrift

$$\theta_{slot}(t) = \pm\theta_{sat}(t) - \theta_{inter}(t)$$

kombiniert wird, wobei es sich bei dem Nutungswinkel, dem Winkel des Intermodulationssignalanteils und dem Winkel des Sättigungssignalanteils um Phasenwinkeln handelt. $\theta_{inter}(t)$ bezeichnet den Winkel des Intermodulationssignalanteils, $\theta_{sat}(t)$ den Winkel des Sättigungssignalanteils und $\theta_{slot}(t)$ den Nutungswinkel.

ein durch Nutungs- und magnetische Sättigungseffekte in der Drehstrommaschine hervorgerufener Intermodulationssignalanteil, der aus dem in dem zumindest einen Strang gemessenen oder ermittelten elektrischen Signalverlauf ermittelt wird, zur Regelung der Drehstrommaschine herangezogen wird. Der Intermodulationssignalanteil kann dabei insbesondere zur Bestimmung der Rotorposition, also der Winkellage des Rotors, herangezogen werden, welche in weiterer Folge bei der Regelung der Drehstrommaschine verwendet werden kann. Vorzugsweise wird zumindest ein elektrischer Stromverlauf gemessen oder ermittelt und als elektrischer Signalverlauf verwendet. Aus diesem Grund beziehen sich die folgenden Ausführungen auf gemessene Stromverläufe. Es können aber auch gemessene oder ermittelte Spannungsverläufe herangezogen werden. Die Ermittlung des Signalverlaufs, insbesondere eines Stromverlaufs, in dem zumindest einen Strang der Drehstrommaschine kann beispielsweise durch Messungen von Strömen und/oder Spannungen in einem Zwischenkreis des Umrichters, in einer Energieversorgung des Umrichters oder in einer Anspeisung eines maschinenseitigen Umrichters erfolgen. Insbesondere können Strangströme der Drehstrommaschine auf Basis eines Zwischenkreisstromes ermittelt werden. Da sich das Verfahren insbesondere für die Anwendung bei Asynchronmaschinen oder elektrischen Maschinen mit einem zumindest teilweisen asynchronmaschinenartigen Charakter (beispielsweise Synchronmaschinen mit Dämpferkäfig) eignet, beziehen sich die nachfolgenden Ausführungen primär auf Asynchronmaschinen. Vorzugsweise kann die Drehstrommaschine zwei, drei oder mehr als drei Stränge aufweisen. Besonders bevorzugt ist die Drehstrommaschine als dreiphasige Drehstrommaschine, insbesondere als dreiphasige Asynchronmaschine, mit drei Strängen ausgebildet. Der Erfindung liegt die Erkenntnis zugrunde, dass, wie weiter unten näher ausgeführt wird, ein mathematischer bzw. physikalischer Zusammenhang zwischen dem Intermodulationssignalanteil und dem für die Winkellage bzw. Drehzahl des Rotors repräsentativen Nutungssignalanteil besteht und aus dem Intermodulationssignalanteil daher ein Regel- und Positionssignal zur Regelung der Drehstrommaschine abgeleitet und verwendet werden kann. Somit muss der oftmals schwer zu bestimmende Nutungssignalanteil nicht mehr direkt herangezogen werden. Vorteilhafterweise ist der Intermodulationssignalanteil in der Signalantwort der Drehstrommaschine als Reaktion auf ein Anregungssignal in den meisten Betriebszuständen der Drehstrommaschine deutlich größer als der Nutungssignalanteil und kann daher einfacher identifiziert und von anderen Signalanteilen getrennt werden. Der Intermodulationssignalanteil kann dabei im Zeitbereich und/oder im Frequenzbereich ausgewertet werden. Insbesondere kann in weiterer Folge aus dem Intermodulationssignalanteil eine Winkellage und/oder eine Drehzahl des Rotors bestimmt werden. Zu diesem Zweck kann zusätzlich auch ein Sättigungssignalanteil herangezogen und mit dem Intermodulationssignalanteil verknüpft werden (siehe unten). Der Intermodulationssignalanteil wird hauptsächlich durch Effekte der Nutung des Rotors bzw. des Stators der Drehstrommaschine und durch Effekte der magnetischen Sättigung von magnetischen Flusspfaden innerhalb der Drehstrommaschine hervorgerufen. Der Intermodulationssignalanteil besitzt in den meisten Betriebszuständen eine andere Grundfrequenz als der Nutungssignalanteil und der Sättigungssignalanteil. Die beschriebenen Effekte verursachen wiederum eigene Signalanteile, die ebenfalls in dem zumindest einen gemessenen Stromverlauf enthalten sind. Die durch die Nutung des Rotors und des Stators der Drehstrommaschine erzeugten Signalanteile im Stromverlauf werden als Nutungssignalanteile bezeichnet. Die Grundfrequenz der Nutungssignalanteile entspricht regelmäßig im Wesentlichen der **N**-fachen Drehfrequenz des Rotors, wobei N der Anzahl an Nuten des Rotors entspricht. Die durch zeitliche und örtliche Variation der magnetischen Sättigung von magnetischen Flusspfaden innerhalb der Drehstrommaschine hervorgerufenen Signalanteile im Stromverlauf werden als Sättigungssignalanteile bezeichnet. Die Grundfrequenz des Sättigungssignalanteils entspricht regelmäßig im Wesentlichen der doppelten Grund- oder auch Arbeitswelle der Maschine. Durch physikalische Verknüpfung der beiden genannten Effekte werden auch deren Signalanteile in der Drehstrommaschine verknüpft und dadurch der Intermodulationssignalanteil generiert, dessen Frequenzen von den Frequenzen des Sättigungssignalanteils und den Frequenzen des Nutungssignalanteils in den meisten Betriebszuständen verschieden ist (Intermodulation). Der Effekt der beschriebenen Intermodulation tritt insbesondere bei Asynchronmaschinen und elektrischen Maschinen mit zumindest teilweisem asynchronmaschinenähnlichem Charakter auf, weshalb sich das erfindungsgemäße Verfahren insbesondere zur Regelung von Asynchronmaschinen eignet. In bisherigen Anwendungen, die aus dem Stand der Technik bekannt sind, wurde der Intermodulationssignalanteil in der Reaktion der Maschine auf ein Anregungssignal als Störkomponente betrachtet und eliminiert. Wie bereits erwähnt, liegt der Erfindung die Erkenntnis zugrunde, dass ein Zusammenhang zwischen dem Intermodulationssignalanteil und dem für die Winkellage und Drehzahl des Rotors repräsentativen Nutungssignalanteil besteht, und sich das Intermodulationssignal daher ebenfalls zur Regelung der Drehstrommaschine eignet. Der Zusammenhang der Frequenzen des Intermodulations-, des Nutungsund des Sättigungssignalanteils lautet

$$\omega_{inter} = \pm\omega_{sat} - \omega_{slot}, \tag{1}$$

wobei $\omega_{inter}$ die Frequenz des Intermodulationssignalanteils, $\omega_{sat}$ die Frequenz des Sättigungssignalanteils und $\omega_{slot}$ die Frequenz des Nutungssignalanteils bedeutet. Das Vorzeichen von $\omega_{sat}$ in Gleichung (1) hängt von der Konstruktion und der Bauart der Drehstrommaschine ab. Um mit Hilfe des Intermodulationssignalanteils auf den Nutungssignalanteil zurückzurechnen, kann daher insbesondere auch der Sättigungssignalanteil, vorzugsweise dessen Grundfrequenz, herangezogen werden. Der Sättigungssignalanteil kann aus den Strömen in den Strängen der Drehstrommaschine bestimmt werden. Neben den Grundfrequenzen können die genannten Signalanteile auch Oberwellen aufweisen, welche zum Zwecke der vereinfachten Erläuterung und auf Grund ihres geringen Einflusses jedoch vernachlässigt werden. Der Erfindung liegt in weiterer Folge die Erkenntnis zugrunde, dass der Zusammenhang zwischen dem Intermodulationssignalanteil und dem Nutungssignalanteil genutzt werden kann, um mit Hilfe des Intermodulationssignalanteils eine Winkellage und/oder eine Drehzahl des Rotors zu bestimmen, ohne den Nutungssignalanteil direkt aus dem Stromverlauf ermitteln oder heranziehen zu müssen. Der Intermodulationssignalanteil kann daher vorteilhafterweise bei allen Regelungsverfahren, bei denen die Kenntnis der Winkellage des Rotors bzw. die Winkellage der Flussverkettung notwendig ist, eingesetzt werden. Das Intermodulationssignal wird, im Unterschied zur Erfindung, beim Stand der Technik üblicherweise als Störsignal eliminiert und der Nutungssignalanteil bzw. der Sättigungssignalanteil direkt zur Regelung herangezogen.

Besonders günstig ist, wenn an allen Strängen der Drehstrommaschine elektrische Signale, insbesondere Spannungssignale, aufgeschaltet werden und der sich in Folge einstellende Stromverlauf jeden Stranges ermittelt, insbesondere gemessen, ausgewertet und zur Bestimmung des Intermodulationssignalanteils herangezogen wird. Die aufgeschalteten elektrischen Signale können dabei insbesondere Anregungssignale enthalten. Die Reaktion der Maschine auf die Anregungssignale lässt Rückschlüsse auf den Betriebszustand der Maschine zu, sodass der Intermodulationssignalanteil ermittelt werden kann. Es können verschiedene Arten und Formen von Anregungssignalen vorgesehen sein. Die Anregungssignale können zum Beispiel Spannungssignale sein, die (ohnehin) zur Erzeugung des Drehfeldes im Luftspalt aufgeschaltet werden. Dabei können die Anregungssignale die Folge von Schalthandlungen der Leistungshalbleiter eines Umrichters sein, wie beispielsweise die PWM (Puls-Weiten-Modulation) oder ähnliche Verfahren. Mit den Schalthandlungen erzeugt der Umrichter das Drehfeld im Luftspalt. Somit können die Anregungssignale in die Drehfeldanregung integriert sein. Beispielsweise kann auch die Trägerfrequenz der PWM oder deren Oberfrequenzen als Anregungssignal betrachtet und verwendet werden. Somit werden Teile der Schaltfolge zum Betrieb der Drehstrommaschine genutzt und deren Stromverläufe bestimmt und ausgewertet. Die Anregungssignale können aber auch von der Schaltfolge zur Erzeugung des Drehfelds der Drehstrommaschine unabhängige Anregungssignale bzw. Testsignale sein, die zwischen den Schaltfolgen zur Erzeugung des Drehfeldes im Luftspalt aufgeschaltet und/oder diesen überlagert werden. Als Anregungssignale werden bevorzugt Rechteckimpulse verwendet, da diese auf einfache Weise mit Hilfe eines Umrichters erzeugt werden können. Die Anregungssignale können aber auch beispielsweise sinusförmig, transient, pulsierend und/oder rotierend sein. Die Anregungssignale können auch selbst PWM-moduliert sein. Wichtig ist lediglich, dass eine Maschinenantwort auf ein Anregungssignal (z.B. ein Stromverlauf) bestimmt werden kann, der Rückschlüsse auf die eingangs erwähnten, sich ändernden Asymmetrien der Drehstrommaschine zulässt. Vorzugsweise wird bei der Aufschaltung von Anregungssignalen, die nicht Bestandteil der Schaltfolge zum Betrieb der Drehstrommaschine sind, also nicht zur Erzeugung des Drehfelds dienen, die Frequenz der Anregungssignale derart gewählt, dass diese keinen oder nur minimalen Einfluss auf das erzeugte Drehfeld, respektive auf das Drehmoment, im Luftspalt nehmen.

In einer bevorzugten Ausführungsform ist vorgesehen, dass aus dem Intermodulationssignalanteil eine Winkellage und/oder eine Drehzahl des Rotors ermittelt wird und die Winkellage und/oder die Drehzahl zur Regelung der Drehstrommaschine verwendet wird. Beispielsweise kann die Drehzahl mit Hilfe der Formel (1) bestimmt werden. Bei der Bestimmung der Winkellage und/oder der Drehzahl kann daher auch ein Sättigungssignalanteil, insbesondere dessen Winkel oder ein hierfür repräsentativer Winkel, verwendet werden. In einer Ausführungsform kann durch Integration der Winkelgeschwindigkeit $\omega_{slot}$ auf die Winkellage des Rotors zurückgerechnet werden. Die Winkellage kann insbesondere dazu verwendet werden, bei einem Regelungsverfahren die zur Regelung benötigten physikalischen, insbesondere elektrischen, Größen darzustellen.

Vorzugsweise wird der Intermodulationssignalanteil aus dem zumindest einen zeitlichen Stromverlauf, insbesondere aus dessen zeitlicher Änderung, ermittelt. Eine zugehörige zeitliche Änderung kann auch nach einer allfälligen Verknüpfung von mehreren Stromverläufen unterschiedlicher Stränge durch eine mathematische Gleichung bestimmt werden.

In einer weiteren Ausführungsform ist vorgesehen, dass in zumindest zwei Strängen, insbesondere in drei Strängen, der Drehstrommaschine Stromverläufe, insbesondere deren zeitliche Änderungen, ermittelt werden und die Stromverläufe, vorzugsweise deren zeitliche Änderungen, durch eine mathematische Gleichung, insbesondere eine Gleichung zur Berechnung eines Raumzeigers, zu einem verknüpften Signal verknüpft werden und der Intermodulationssignalanteil aus dem verknüpften Signal ermittelt wird. Bevorzugt stellen die gemessenen Stromverläufe diskrete Zeitsignale dar. Die gemessenen Stromverläufe können aber auch zeitkontinuierliche Signale sein. An Stelle von Stromverläufen können auch Spannungsverläufe herangezogen werden.

Bei der Bestimmung der internen Zustände der Drehstrommaschine ist es auf Grund der elektrischen Beziehung

$$u(t) = L \frac{di(t)}{dt} \qquad (2)$$

günstig, wenn die zeitlichen Änderungen der Stromverläufe durch die mathematische Gleichung verknüpft werden oder nach der Verknüpfung eine zeitliche Änderung des verknüpften Signals bestimmt wird, da die Asymmetrien, die eine Auswertung der Winkellage oder Drehzahl des Rotors ermöglichen, insbesondere durch Induktivitätsänderungen feststellbar sind und die Induktivität L mit der Spannung u(t) über die zeitliche Änderung des Stromes di(t)/dt verknüpft ist. Wenn das aufgeschaltete elektrische Signal ein im Wesentlichen sinusförmiges Spannungssignal ist, können auch die gemessenen Stromwerte, insbesondere Amplitudenoder Effektivwerte, im Wesentlichen direkt herangezogen und verknüpft werden, da sich auf Grund der komplexen Wechselstromrechnung die Beziehung nach Gleichung (2) zu

$$U(t) = j\omega L I(t) \qquad (3)$$

vereinfacht, wobei U wieder eine Spannung, j die imaginäre Einheit, $\omega$ eine Winkelgeschwindigkeit/Frequenz, L eine Induktivität und I ein Strom bedeutet. Als Gleichung zur Verknüpfung der Stromverläufe, insbesondere deren zeitliche Änderung, kann beispielsweise eine Gleichung zur Berechnung eines Raumzeigers, wie etwa

$$\vartheta_{saliency} = i_U(t) + i_V(t)e^{j2\frac{\pi}{3}} + i_W(t)e^{j4\frac{\pi}{3}}$$

(4a)

bzw.

$$\vartheta_{saliency} = \frac{di_U(t)}{dt} + \frac{di_V(t)}{dt}e^{j2\frac{\pi}{3}} + \frac{di_W(t)}{dt}e^{j4\frac{\pi}{3}}$$

(4b)

verwendet werden, wobei $i_{U,V,W}(t)$ einen Stromverlauf (bzw. $di_{U,V,W}(t)/dt$ dessen erste zeitliche Ableitung) in einem Strang U, V, W der Drehstrommaschine, j die imaginäre Einheit, e die Eulersche Zahl und $\pi$ die Kreiszahl bedeutet. Das verknüpfte Signal $\vartheta_{Saliency}$ ist in diesem Fall ein komplexer Vektor, äquivalent einem Raumzeiger. Durch einen Raumzeiger werden physikalische Größen, insbesondere Größen eines Mehrphasensystems, in der komplexen Ebene mit Real- und Imaginärteil abgebildet. Das Intermodulationssignal kann in weiterer Folge aus dem verknüpften Signal bestimmt werden.

Der Intermodulationssignalanteil wird durch Eliminierung von anderen Signalanteilen extrahiert. Bevorzugt ist, wenn der Intermodulationssignalanteil durch Eliminierung von Sättigungssignalanteilen auf Grund von magnetischen Sättigungseffekten und/oder Nutungssignalanteilen auf Grund von Nutungseffekten in der Drehstrommaschine, insbesondere aus dem verknüpften Signal, extrahiert wird. Mit anderen Worten wird der Intermodulationssignalanteil isoliert. Es können auch weitere Signalanteile eliminiert werden. Die Eliminierung anderer Signalanteile als jene des Intermodulationssignalanteils kann beispielsweise durch Filterung erfolgen. Die Eliminierung kann auch durch Subtraktion der unerwünschten Singalanteile erfolgen. Beispielsweise können die unerwünschten Signalanteile in Frequenz, Amplitude und Phase geschätzt und vom Stromverlauf oder dem verknüpften Stromsignal abgezogen werden. Dies kann zum Beispiel durch vorherige Identifikation der Maschine und mittels Verwendung einer Kostenfunktion erfolgen, wie beispielsweise in "Identification and Compensation of High-order Harmonic Distortions in Saliency Based Sensorless Control of Induction Machines" von W. Fahrner, M.A. Vogelsberger und T. Wolbank oder in "Induction Machine Design Methodology for Self-Sensing: Balancing Saliencies and Power Conversion Properties." von Brown, Ian Paterson und Robert D. Lorenz erläutert wird.

Erfindungsgemäß ist vorgesehen, dass aus einem Winkel des Intermodulationssignalanteils eine Nutungsinformation, nämlich ein Nutungswinkel, ermittelt wird, indem der Winkel des Intermodulationssignalanteils mit einem Winkel eines im Stromverlauf enthaltenen Sättigungssignalanteils durch die Berechnungsvorschrift

$$\theta_{slot}(t) = -\theta_{inter}(t) \pm \theta_{sat}(t) \qquad (5)$$

kombiniert wird. $\theta_{slot}(t)$ entspricht hierbei dem errechneten Nutungswinkel, $\theta_{inter}(t)$ dem Winkel des Intermodulationssignalanteils und $\theta_{sat}(t)$ dem Winkel des Sättigungssignalanteils. Der auf diese Weise ermittelte Nutungswinkel $\theta_{slot}(t)$ entspricht im Wesentlichen dem Winkel des Nutungssignalanteils. Mit anderen Worten wird durch Kombination des Winkels $\theta_{inter}(t)$ des Intermodulationssignalanteils und des Winkels $\theta_{sat}(t)$ des Sättigungssignalanteils der Nutungswinkel $\theta_{slot}(t)$ bestimmt bzw. errechnet. Bei den Winkeln $\theta_{slot}(t)$, $\theta_{inter}(t)$ und $\theta_{sat}(t)$ handelt es sich um Phasenwinkel, insbesondere um Phasenwinkel der Grundfrequenzen der einzelnen Effekte. Der Winkel $\theta_{sat}(t)$ des Sättigungssignalanteils kann aus dem doppelten Winkel des Statorstroms bestimmt werden, wobei zur Korrektur ein lastabhängiger Offsetwert vorgesehen sein kann. Der Offsetwert kann zum Beispiel mittels einer Kostenfunktion aus Messungen an der Drehstrommaschine bestimmt werden.

Zur Berechnung der mechanischen Rotorwinkellage kann in einer Ausführungsform vorgesehen sein, dass durch Division des Nutungwinkels durch eine Anzahl an Nuten des Rotors eine mechanische Winkellage des Rotors bestimmt wird. Vorzugsweise entspricht die Anzahl an Nuten der Gesamtzahl an Nuten des Rotors.

Im Rahmen von Versuchen mit dem erfindungsgemäßen Verfahren hat sich herausgestellt, dass der Winkel des Intermodulationssignalanteils in Abhängigkeit der Drehzahl und/oder der Belastung der Drehstrommaschine eine Abweichung aufweisen kann, sodass eine aus dem Intermodulationssignalanteil ermittelte Winkellage des Rotors von der tatsächlichen Winkellage abweichen kann. Aus diesem Grund kann es günstig sein, wenn beispielsweise der Winkel des Intermodulationssignalanteils in Abhängigkeit der Belastung, insbesondere des Drehmoments, und/oder der Drehzahl der Drehstrommaschine mit Hilfe eines Intermodulations-Korrekturwertes korrigiert wird. Der Intermodulations-Korrekturwert kann vor Anwendung des Verfahrens beispielsweise durch Messungen an der Maschine oder Berechnungen bestimmt und beispielsweise in einer Tabelle gespeichert, oder durch eine mathematische Funktion nachgebildet werden.

Des Weiteren hat sich bei den Versuchen herausgestellt, dass auch der Winkel des Sättigungssignalanteils in Abhängigkeit der Drehzahl und/oder der Belastung der Drehstrommaschine eine Abweichung aufweisen kann. Aus diesem Grund kann vorgesehen sein, dass der Winkel des Sättigungssignalanteils in Abhängigkeit der Belastung, insbesondere des Drehmoments, und/oder der Drehzahl der Drehstrommaschine mit Hilfe eines Sättigungs-Korrekturwertes korrigiert wird. Der Sättigungs-Korrekturwert kann vor Anwendung des Verfahrens beispielsweise durch Messungen an der Maschine oder Berechnungen bestimmt und beispielsweise in einer Tabelle gespeichert, oder durch eine mathematische Funktion nachgebildet werden.

In einer Ausführungsform kann vorgesehen sein, dass das elektrische Signal, das auf die Drehstrommaschine aufgeschaltet wird, ein im Wesentlichen von der Grundwelle des Drehfeldes der Drehstrommaschine unabhängiges Anregungssignal aufweist, dessen zeitliche Grundfrequenz vorzugsweise zumindest das Fünffache, noch mehr bevorzugt zumindest das Zehnfache der zeitlichen Frequenz der Grundwellen der Spannungen in den Strängen (U,V,W) zur Erzeugung des Drehfelds der Drehstrommaschine beträgt. Vorzugsweise ist das Anregungssignal ein Spannungssignal. In einer weiteren Ausführungsform beträgt die zeitliche Grundfrequenz des Anregungssignals zumindest das Doppelte der betriebsmäßigen Schlupffrequenz einer Asynchronmaschine. Das Anregungssignal kann auch aus einer Folge von im Wesentlichen rechteckförmigen Spannungspulsen (Sprungfunktionen) erzeugt werden, welche sowohl durch einzelne Schalthandlungen des Umrichters, als auch gepulst als Kombination von mehreren Einzelpulsen mit zeitlichsprungförmig und/oder unterschiedlichen Duty-Zyklen (Tastgraden) gebildet sein können.

Bei einer Ausführungsform ist vorgesehen, dass das elektrische Anrege-Signal ein Stromsignal ist und zur Bestimmung des Intermodulationssignalanteils die Reaktion der Drehstrommaschine, insbesondere die Spannung an der Drehstrommaschine, ausgewertet wird.

Die oben gestellte Aufgabe wird ebenfalls durch ein Drehstrommaschinensystem gemäß Anspruch 12 gelöst. Das Drehstrommaschinensystem weist auf:

- eine Drehstrommaschine, insbesondere eine Asynchronmaschine, mit einem Rotor, einem Stator und zumindest zwei Strängen;

- einen Leistungsteil, insbesondere einen Umrichter, der mit der Drehstrommaschine elektrisch verbunden ist, wobei der Leistungsteil dazu eingerichtet ist, Anregungssignale, insbesondere Spannungssignale oder Stromsignale, an zumindest einem Strang, vorzugsweise allen Strängen, der Drehstrommaschine aufzuschalten;
- zumindest eine Messvorrichtung, die dazu eingerichtet ist, einen zeitlichen Verlauf der Reaktion der Maschine, insbesondere einen Stromverlauf oder einen Spannungsverlauf, in dem zumindest einen Strang oder in einem Zwischenkreis des Umrichters oder in der Energieversorgung für den Umrichter oder in der Anspeisung eines maschinenseitigen Umrichters zu messen oder zu ermitteln,
- eine Regelungseinheit, die dazu eingerichtet ist, die Drehstrommaschine auf Basis eines durch Nutungs- und magnetische Sättigungseffekte in der Drehstrommaschine hervorgerufenen Intermodulationssignalanteils zu regeln, welcher Intermodulationssignalanteil in dem zumindest einen gemessenen Stromverlauf, insbesondere in dessen zeitlicher Änderung, enthalten ist, wobei die Regelungseinheit weiter dazu eingerichtet ist, den Intermodulationssignalanteil durch Eliminierung von anderen Signalanteilen zu extrahieren und aus einem Winkel des Intermodulationssignalanteils einen Nutungswinkel zu ermitteln, indem der Winkel des Intermodulationssignalanteils mit einem Winkel eines im zumindest einen Signalverlauf enthaltenen Sättigungssignalanteils durch die Berechnungsvorschrift

$$\theta_{slot}(t) = \pm\theta_{sat}(t) - \theta_{inter}(t)$$

kombiniert wird, wobei es sich bei dem Nutungswinkel $\theta_{slot}(t)$, dem Winkel $\theta_{inter}(t)$ des Intermodulationssignalanteils und dem Winkel $\theta_{sat}(t)$ des Sättigungssignalanteils um Phasenwinkeln handelt.

Das Drehstrommaschinensystem ist dazu eingerichtet, das oben beschriebene Verfahren durchzuführen. Hinsichtlich der Vorteile, den technischen Effekten und weiteren Merkmalen wird daher auf das oben beschriebene Verfahren verwiesen. Der Leistungsteil kann Anregungssignale durch Schalthandlungen erzeugen. Zu diesem Zweck kann der Leistungsteil eine Mehrzahl an elektrischen Schaltern, beispielsweise Halbleiterschaltern, aufweisen. Die Messvorrichtung kann zumindest einen Strom- oder Spannungsmesssensor aufweisen. Vorzugsweise können mit der Messvorrichtung die Stromverläufe in allen Strängen der Drehstrommaschine ermittelt werden. Zu diesem Zweck kann in jedem Strang der Drehstrommaschine ein Strommesssensor vorgesehen sein. Bei m Strängen kann auch nur in m-1 Strängen jeweils ein Strommesssensor vorgesehen sein und der Strom des m-ten Stranges auf Basis der Knotenregel errechnet werden.

Die Strangströme der Drehstrommaschine können auch durch Messung im Zwischenkreis des Umrichters, in der Energieversorgung des Umrichters oder in der Anspeisung des maschinenseitigen Umrichters bestimmt bzw. berechnet werden.

Die Regelungseinheit kann beispielsweise eine eigenständige Einheit oder Bestandteil einer anderen Einheit, insbesondere eines Mikroprozessors, sein. Die Regelungseinheit kann in dem Umrichter integriert sein. Die Stränge der Drehstrommaschine bilden Spulen aus oder sind mit Spulen verbunden, die einen magnetischen Fluss im Luftspalt zwischen Rotor und Stator der Drehstrommaschine erzeugen können.

Im Folgenden wird die Erfindung anhand der Figuren beschrieben, auf die sie allerdings nicht beschränkt sein soll.

Fig. 1 zeigt schematisch ein Drehstrommaschinensystem mit einem Umrichter und einer Drehstrommaschine;

Fig. 2 zeigt eine Asynchronmaschine im Querschnitt;

Fig. 3A zeigt schematisch ein beispielhaftes Anregungssignal;

Fig. 3B zeigt schematisch Stromverläufe in Folge des Anregungssignals gemäß Fig. 3A (bei unterschiedlichen Rotorpositionen);

Fig. 4A zeigt ein verknüpftes Signal im Zeitbereich, welches aus einer Verknüpfung von Stromverläufen sämtlicher Stränge der Drehstrommaschine erzeugt wurde;

Fig. 4B zeigt das verknüpfte Signal von Fig. 4A im Frequenzbereich;

Fig. 5 zeigt eine Realkomponente des verknüpften Signals;

Fig. 6 zeigt eine Realkomponente eines Intermodulationssignalanteils;

Fig. 7A-D zeigen verschiedene Signalverläufe der Drehstrommaschine bei unterschiedlichen Betriebszuständen der Drehstrommaschine;

Fig. 8A-C zeigen jeweils Verläufe von Korrekturwerten;

Fig. 9 zeigt ein Blockschaltbild als Beispiel zur Realisierung der Erfindung; und

Fig. 10A-C stellen Anregungssignale und sich einstellende Stromverläufe dar.

Im Folgenden wird das erfindungsgemäße Verfahren anhand einer Anwendung an einer Asynchronmaschine näher erläutert.

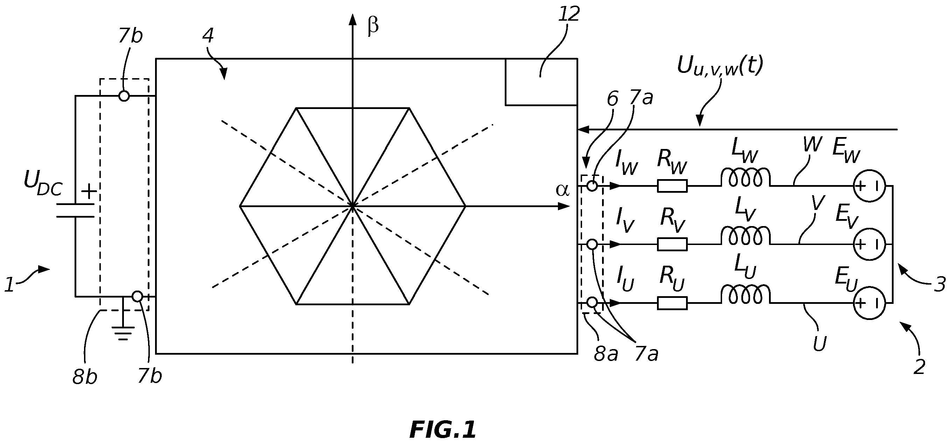

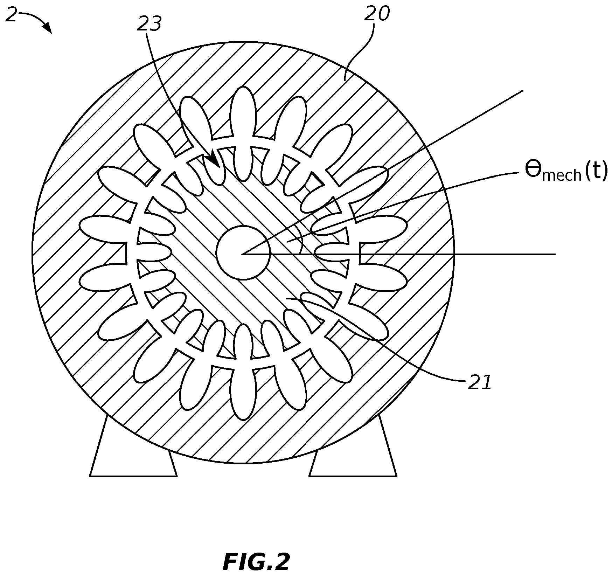

Fig. 1 zeigt schematisch ein Drehstrommaschinensystem 1 mit einer als Asynchronmaschine 2 ausgebildeten Drehstrommaschine 3 an einem Umrichter 4, welcher eine Mehrzahl an (nicht gezeigten) elektronischen Schaltern, beispielsweise Halbleiterschalter, besitzt. Der Umrichter 4 ist dazu eingerichtet, durch entsprechende Schalthandlungen Spannungen mit vorgegebenen Frequenzen, Amplituden und (Null-)Phasenwinkeln an einem Ausgang 6 auszugeben. Der Ausgang 6 des Umrichters 4 ist mit den Strängen U, V, W der Asynchronmaschine 2 verbunden. Durch die erzeugten Spannungen des Umrichters 4 wird in einem Luftspalt der Asynchronmaschine 2 zwischen Rotor 21 und Stator 20 (siehe Fig. 2) ein Drehfeld erzeugt, das Spannungen in den Rotor 21 der Asynchronmaschine 2 induziert und diesen durch die daraus resultierenden Rotorströme in Drehung versetzt.

Die Asynchronmaschine 2 ist in Fig. 1 schematisch als Schaltbild dargestellt. Die Asynchronmaschine 2 besitzt drei Stränge U, V, W mit jeweils einem Strangwiderstand $R_U$, $R_V$, $R_W$ und einer Stranginduktivität $L_U$, $L_U$, $L_W$. Die Spannungen $E_U$, $E_V$, $E_W$ bezeichnen die in den Stator 20 der Asynchronmaschine 2 induzierten Spannungen (Back-EMF). Die in den Strängen U, V, W fließenden Ströme $I_U$, $I_V$, $I_W$ können mit Strommesssensoren 7a und/oder 7b, einer Messvorrichtung 8a bzw. 8b gemessen bzw. ermittelt werden. Mit Hilfe der Strommesssensoren 7b können ebenfalls Strangströme ermittelt werden, beispielsweise auf Basis eines in den Umrichter 4 fließenden Stromes. Es kann vorgesehen sein, dass in jedem Strang U, V, W ein Strommesssensor 7a vorgesehen ist. Die Strommesssensoren 7a bzw. 7b können in den Umrichter 4 integriert oder eigenständige Elemente sein. Mit Hilfe der Strommesssensoren 7a und/oder 7b können die zeitlichen Stromverläufe $i_U(t)$, $i_V(t)$, $i_W(t)$ der Ströme $I_U$, $I_V$, $I_W$ in den Strängen U, V, W bestimmt werden.

Fig. 2 zeigt schematisch eine Asynchronmaschine 2 ohne Wicklungen im Querschnitt mit einem Stator 20, einem Rotor 21 und einer Nutung 23, jeweils an Rotor 21 und Stator 20. Zur Illustration ist eine Winkellage $\theta_{mech}(t)$ des Rotors 21 eingezeichnet.

Wie oben erwähnt, weist die Asynchronmaschine 2 Asymmetrien auf, die sich zeitlich und örtlich verändern können und dadurch Rückschlüsse auf die Winkellage $\theta_{mech}(t)$ und/oder die Drehzahl des Rotors 21 ermöglichen. Ein Beispiel für eine solche Asymmetrie ist die Nutung 23 des Rotors 21 und/oder Stators 20. Ein weiteres Beispiel für eine Asymmetrie ist die Sättigung der magnetischen Flusswege in der Asynchronmaschine 2. Beide Asymmetrien verursachen im Betrieb der Asynchronmaschine 2 zeitliche sowie räumliche Induktivitätsänderungen, die über die Auswertung der Stromverläufe $i_U(t)$, $i_V(t)$, $i_W(t)$ festgestellt werden können. Bei einem stark vereinfachten Modell zur Veranschaulichung einer Asymmetrie kann beispielsweise angenommen werden, dass die drei Stranginduktivitäten $L_U$, $L_V$, $L_W$ in den Strängen U, V, W jeweils einen Mittelwert $L_0$ aufweisen und, abhängig von einer mechanischen Winkellage $\theta_{mech}(t)$ des Rotors 21, von diesem Mittelwert $L_0$ sinusförmig (mit einer Amplitude $L_M$) abweichen:

$$L_U(\theta_{mech}(t)) = L_{U,0} + L_{U,M} \sin(\theta_{mech}(t)) \qquad (6A)$$

$$L_V(\theta_{mech}(t)) = L_{V,0} + L_{V,M} \sin(\theta_{mech}(t) + \tfrac{2\pi}{3}) \qquad (6B)$$

$$L_W(\theta_{mech}(t)) = L_{W,0} + L_{W,M} \sin(\theta_{mech}(t) + \tfrac{4\pi}{3}) \qquad (6C)$$

Durch die Änderung der Winkellage $\theta_{mech}(t)$ des Rotors 21 werden daher auch die Induktivitäten $L_U$, $L_V$, $L_W$ verändert. Die veränderlichen Induktivitätsanteile können daher auch als modulierte Induktivitäten bezeichnet werden. Die Veränderungen der Induktivitäten $L_U$, $L_V$, $L_W$ können beispielsweise durch die Nutung 23 des Rotors 21 bzw. Stators 20 und/oder die magnetische Sättigung magnetischer Eisenwege in der Drehstrommaschine 3 bedingt sein.

Die Bestimmung der Winkellage $\theta_{mech}(t)$ des Rotors 21 bei Asynchronmaschinen 2 stellt bislang eine große Herausforderung dar, da Asynchronmaschinen 2, insbesondere im Vergleich zu den meisten Synchronmaschinen, deutlich kleinere Asymmetrien und dadurch deutlich kleinere Induktivitätsschwankungen im Betrieb aufweisen.

Um Induktivitätsänderungen zu bestimmen, werden elektrische Signale, vorzugsweise Spannungssignale $U_U$

(t), $U_V$(t), $U_W$(t), an die Stränge U, V, W der Asynchronmaschine 2 aufgeschaltet und die resultierenden Stromverläufe $i_U$(t), $i_V$(t), $i_W$(t) mit Hilfe der Strommesssensoren 7 gemessen. Als Spannungssignale $U_U$(t), $U_V$(t), $U_W$(t) können die vom Umrichter 4 zum Betrieb der Asynchronmaschine 2 angelegten Spannungen oder Spannungspulse verwendet werden. Die elektrischen Signale können zur Bestimmung des Betriebszustandes der Drehstrommaschine 3 Anregungssignale 9 enthalten. Die Anregungssignale 9 können im Wesentlichen unabhängig von der Erzeugung eines Drehfelds der Drehstrommaschine 3 sein. Hierbei können Anregungssignale 9 verwendet werden, die zwischen den vom Umrichter 4 erzeugten Spannungs(pulsen) zur Erzeugung des Drehfeldes aufgeschaltet oder diesen überlagert werden. Es können auch Spannungsformen, deren Frequenz höher als jene zur Erzeugung der Grundwelle des Drehfeldes ist, verwendet werden.

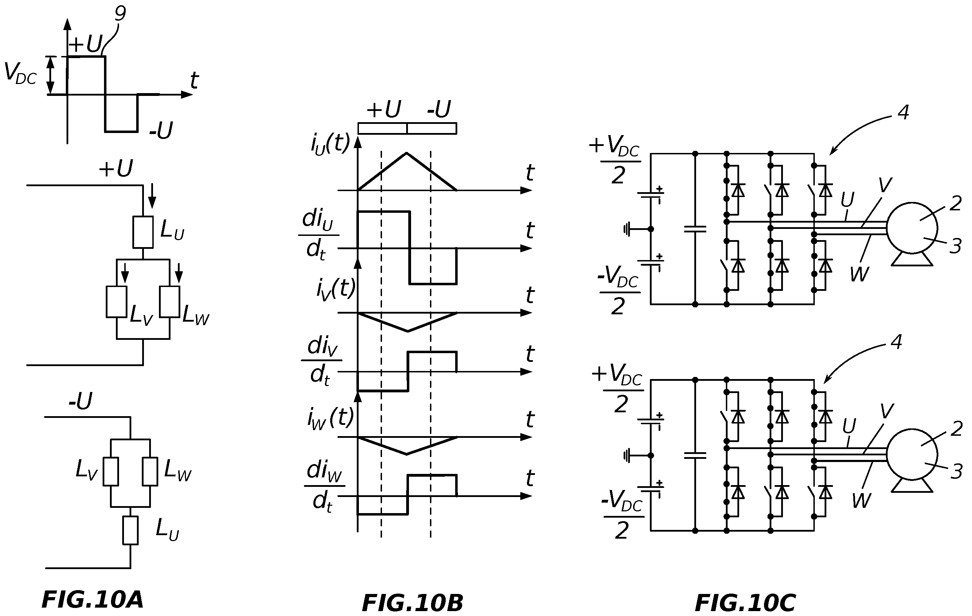

In Fig. 10A bis Fig. 10C werden das Aufschalten eines beispielhaften Anregungssignals 9 und die sich in Folge einstellenden Stromverläufe $i_U$(t), $i_V$(t), $i_W$(t) in den Strängen U, V, W einer Drehstrommaschine 3 illustrativ veranschaulicht. Allfällige ohmsche Widerstände können hierbei vernachlässigt werden. In den Figuren 10A-C sind zwei Schalterstellungen des Umrichters 4 dargestellt, mit denen ein rechteckförmiges Anregungssignal 9 mit einer positiven Spannung +U und einer negativen Spannung -U erzeugt werden kann (Amplitude $V_{DC}$). Wird ein solches Anregungssignal 9, das in dem oberen Teilbild von Fig. 10A über der Zeit t dargestellt ist, aufgeschaltet, stellen sich, wie in Fig. 10B dargestellt, entsprechende Stromanstiege $di_U$/dt, $di_V$/dt, $di_W$/dt in den Stromverläufen $i_U$(t), $i_V$(t), $i_W$(t) ein. In Fig. 10B sind Stromverläufe $i_U$(t), $i_V$(t), $i_W$(t) und Stromanstiege $di_U$/dt, $di_V$/dt, $di_W$/dt eines jeden Stranges U, V, W dargestellt. Elektrische Ersatzschaltbilder der Asynchronmaschine 2 bei angelegten Spannungen +U und -U des Anregungssignals 9 sind in den unteren beiden Teilbildern von Fig. 10A dargestellt. Wird das Anregungssignal 9 aufgeschaltet, stellt sich (bei elektrischer Zählpfeilrichtung nach Fig. 1) zunächst bei positiver Spannung +U ein positiver Stromanstieg $di_U$/dt in Strang U (und damit ein positiver Spannungsabfall an der Stranginduktivität $L_U$) und jeweils ein negativer Stromanstieg $di_V$/dt bzw. $di_W$/dt in den Strängen V und W (und damit ein negativer Spannungsabfall an den Stranginduktivitäten $L_V$ und $L_W$) ein. Bei negativer Spannung -U des Anregungssignals 9 ist der Fall umgekehrt.

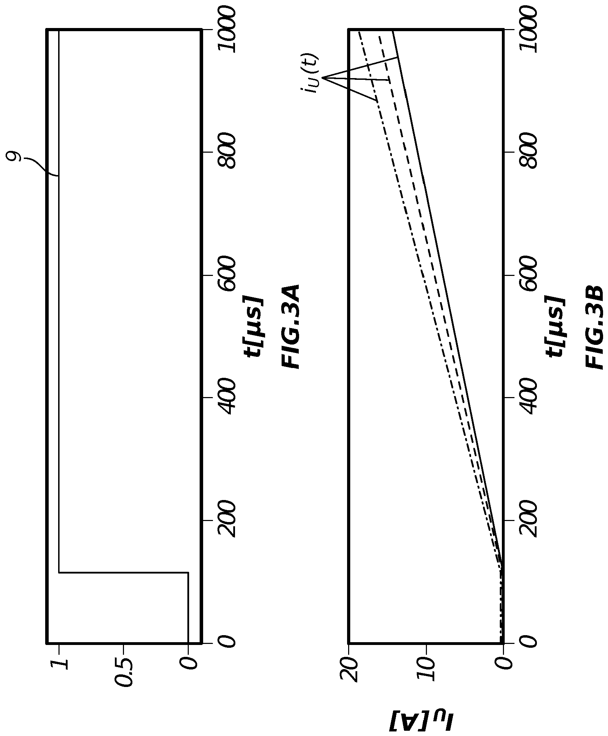

Auf Grund unterschiedlicher Stranginduktivitäten $L_U$, $L_V$, $L_W$ zufolge von Asymmetrien in der Drehstrommaschine 3 ergibt sich eine zusätzliche Abweichung der Stromanstiege $di_U$/dt, $di_V$/dt, $di_W$/dt. Diese zusätzliche Abweichung ist der Fig. 10B nicht dargestellt, sie ist in Fig.3B erkennbar.

In einer Ausführungsform werden zur Induktivitätsbestimmung rechteckförmige Anregungssignale 9, wie beispielsweise in Fig. 3A gezeigt, an die Stränge U, V, W der Asynchronmaschine 2 angelegt. In Fig. 3A ist das Anregungssignal 9 normiert dargestellt. In Folge eines solchen Anregungssignals 9, das beispielsweise zwischen den zur Erzeugung des Drehfeldes in der Asynchronmaschine 2 aufgeschalteten Spannungspulsen angelegt werden kann, stellt sich in den Strängen U, V, W auf Grund der in Gleichung (2) veranschaulichten Beziehung ein Stromanstieg $di_U$/dt, $di_V$/dt, $di_W$/dt ein. Allfällige ohmsche Widerstände können hierbei üblicherweise vernachlässigt werden.

In Fig. 3B sind als Beispiel drei unterschiedliche Stromanstiege $di_U$/dt des Strangstromes $I_U$ in Strang U zu unterschiedlichen Zeitpunkten und damit zu unterschiedlichen Stranginduktivitäten $L_U$ auf Grund der Asymmetrien der Drehstrommaschine 3 dargestellt (vgl. Gleichung 6A-6C). Analoge Darstellungen gelten auch für die übrigen Stränge V und W. Die Darstellungen in den Figuren wurden vereinfacht und sollen das Prinzip der Induktivitätsbestimmung schematisch veranschaulichen. Die Änderung der Stromverläufe $i_U$(t), $i_V$(t), $i_W$(t) mit der Zeit lässt Rückschlüsse auf die Änderung der Induktivitäten $L_U$, $L_V$, $L_W$ zu.

Die vorzugsweise in zeitlich regelmäßigen Abständen bestimmten Stromanstiege $di_U$/dt, $di_V$/dt, $di_W$/dt in den Strängen U, V und W können in weiterer Folge durch eine mathematische Gleichung zu einem verknüpften Signal $\vartheta_{Saliency}$ verknüpft werden. Es können aber auch, insbesondere im Falle von sinusförmigen Anregungssignalen 9, die Stromwerte, also die Amplituden, resp. Effektivwerte, resp. Augenblickswerte, der Ströme $I_U$, $I_V$, $I_W$ herangezogen und verknüpft werden. Vorzugsweise wird zur Verknüpfung der Stromverläufe eine mathematische Gleichung zur Berechnung eines Raumzeigers verwendet, beispielsweise

$$\vartheta_{saliency} = \frac{di_U(t)}{dt} + \frac{di_V(t)}{dt} e^{j2\frac{\pi}{3}} + \frac{di_W(t)}{dt} e^{j4\frac{\pi}{3}} \quad . \qquad (4b)$$

Das verknüpfte Signal $\vartheta_{Saliency}$ kann auch als "saliency-Signal" (engl. "saliency", "Hervorstehen") bezeichnet werden. Wenn das Signal $\vartheta_{Saliency}$ als Raumzeiger berechnet wird, stellt $\vartheta_{Saliency}$ einen Tensor dar.

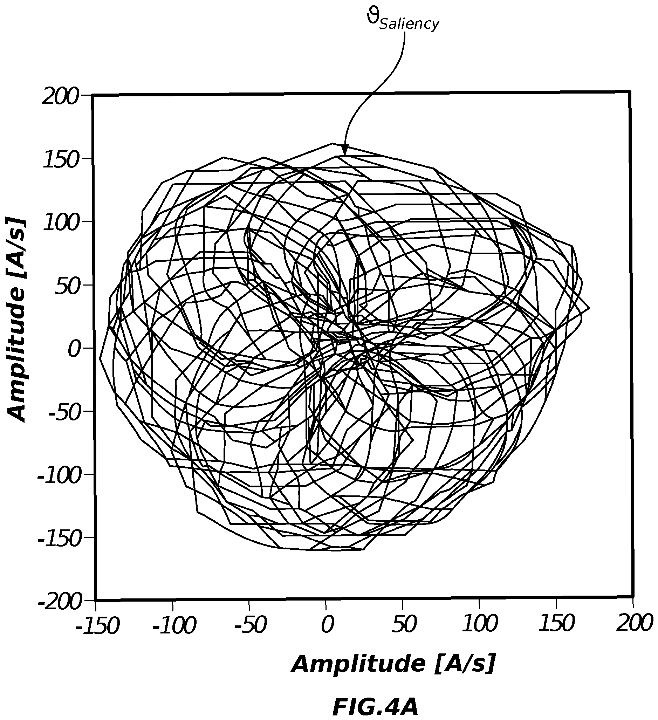

Fig. 4A zeigt die Spur des Tensors $\vartheta_{Saliency}$, wobei sowohl die Abszisse, als auch die Ordinate eine Amplitude in Ampere/Sekunde bezeichnet. Die Abszisse bildet den Realteil und die Ordinate den Imaginärteil des Signals $\vartheta_{Saliency}$ ab.

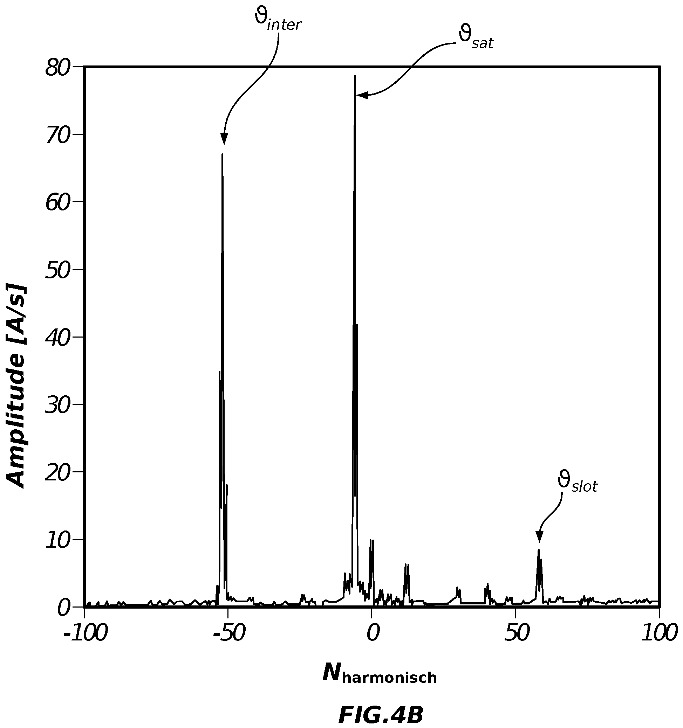

Fig. 4B stellt das in Fig. 4A dargestellte Signal $\vartheta_{Saliency}$ im Frequenzbereich dar, wobei die Abszisse die Harmonischen $N_{harmonisch}$ des Signals abbildet. Wie in Fig. 4B erkennbar ist, beinhaltet $\vartheta_{Saliency}$ drei markante Signalanteile. Ein erster markanter Signalanteil wird durch einen Nutungssignalanteil $\vartheta_{slot}$ gebildet, welcher auf die Nutung 23 des Rotors 21 bzw. des Stators 20 der Drehstrommaschine 3 zurückzuführen ist. Ein zweiter markanter Signalanteil wird durch einen Sättigungssignalanteil $\vartheta_{sat}$ gebildet, welcher auf die Sättigung von magnetischen Flusspfaden in der Drehstrommaschine 3 zurückzuführen ist. Ein dritter markanter Signalanteil wird durch einen Intermodulationssignal-

anteil $\vartheta_{inter}$ gebildet, der auf eine physikalische Verknüpfung des Nutungssignalanteils $\vartheta_{slot}$ und des Sättigungssignalanteils $\vartheta_{sat}$ zurückzuführen ist. Der Nutungssignalanteil $\vartheta_{slot}$, der Sättigungssignalanteil $\vartheta_{sat}$ und der Intermodulationssignalanteil $\vartheta_{inter}$ besitzen jeweils unterschiedliche Grundfrequenzen.

Im Stand der Technik wurden bei sensorloser Regelung unter Verwendung der Nutungsinformation bisher der Intermodulationssignalanteil $\vartheta_{inter}$ und der Sättigungssignalanteil $\vartheta_{sat}$ als Störsignale eliminiert und der Nutungssignalanteil $\vartheta_{slot}$ herangezogen, um eine Winkellage und/oder eine Drehzahl des Rotors zu bestimmen. Wie jedoch in Fig. 4B erkennbar ist, ist im gegenständlichen Fall der Nutungssignalanteil $\vartheta_{slot}$ im Vergleich zu anderen Signalanteilen relativ klein. Es kann daher, insbesondere bei höheren Belastungen der Drehstrommaschine 3, schwierig sein, den Nutungssignalanteil $\vartheta_{slot}$ zu identifizieren und zu extrahieren. In Fig. 4B besitzt der Nutungssignalanteil $\vartheta_{slot}$ bereits in etwa die Größenordnung von höheren Harmonischen des Sättigungssignalanteils $\vartheta_{sat}$.

Erfindungsgemäß ist daher vorgesehen, nicht den Nutungssignalanteil $\vartheta_{slot}$ direkt zur Regelung der Drehstrommaschine 3 zu verwenden, sondern den Intermodulationssignalanteil $\vartheta_{inter}$ und dessen indirekt enthaltene Nutungs- bzw. Rotorwinkelinformation zur Regelung der elektrischen Drehstrommaschine 2 heranzuziehen. Das erfindungsgemäße Verfahren kann in einer Regelungseinheit 12 ausgeführt werden (siehe Fig. 1). Der Intermodulationssignalanteil $\vartheta_{inter}$ stellt über einen großen Drehzahlbereich einen dominanten Signalanteil im Signal $\vartheta_{Saliency}$ dar und kann daher leicht identifiziert werden. Der Erfindung liegt dabei die Erkenntnis zugrunde, dass zwischen der Grundfrequenz des Intermodulationssignalanteils $\vartheta_{inter}$ und der Grundfrequenz des Nutungssignalanteils $\vartheta_{slot}$, welcher Rückschlüsse auf die Winkellage und/oder Drehzahl des Rotors 21 zulässt, ein Zusammenhang besteht. Der Zusammenhang kann dabei durch Gleichung (1)

$$\omega_{inter} = \pm\omega_{sat} - \omega_{slot}, \qquad (1)$$

beschrieben werden, wobei $\omega_{inter}$ die Grundfrequenz des Intermodulationssignalanteils $\vartheta_{inter}$, $\omega_{sat}$ die Grundfrequenz des Sättigungssignalanteils $\vartheta_{sat}$ und $\omega_{slot}$ die Grundfrequenz des Nutungssignalanteils $\vartheta_{slot}$ bedeutet. Das Vorzeichen von $\omega_{sat}$ hängt dabei von der Konstruktion und Bauart der Drehstrommaschine 3 ab.

Um die Winkellage des Rotors zu bestimmen, welche für eine Regelung der Drehstrommaschine 2 verwendet werden kann, wird der Intermodulationssignalanteil $\vartheta_{inter}$ von anderen Signalanteilen getrennt, d.h. im Wesentlichen isoliert, beispielsweise durch Filterung oder Schätzung der unerwünschten Signalanteile und Subtraktion. Von dem Signal $\vartheta_{inter}$, insbesondere von dessen Grundfrequenz, wird ein Winkel $\theta_{inter}(t)$ bestimmt. Bei dem Winkel kann es sich um einen Phasenwinkel handeln, der sich mit der Zeit ändert. Dies kann beispielsweise mit Hilfe einer PLL (engl. "Phase-Locked-Loop") erfolgen. Des Weiteren wird ein Winkel, insbesondere ein Phasenwinkel, $\theta_{sat}(t)$ des Sättigungssignalanteils $\vartheta_{sat}$, insbesondere von dessen Grundfrequenz, ermittelt. Die beiden Winkel $\theta_{sat}(t)$ und $\theta_{inter}(t)$ werden kombiniert, mit Hilfe der Gleichung

$$\theta_{slot}(t) = -\theta_{inter}(t) \pm \theta_{sat}(t) \quad , \qquad (5)$$

um so einen errechneten Winkel $\theta_{slot}(t)$ eines Nutungswinkels zu erhalten. Mit $\theta$ werden in dieser Offenbarung Winkel bezeichnet, während $\vartheta$ Signale bzw. Signalanteile darstellen. Der mit Gleichung (5) bestimmte Nutungswinkel $\theta_{slot}(t)$ ist im Wesentlichen ein errechneter Winkel des Nutungssignalanteils $\vartheta_{slot}$. Durch Division des Nutungswinkels $\theta_{slot}(t)$ durch die Anzahl N an Nuten des Rotors, kann aus $\theta_{slot}(t)$ eine mechanische Winkellage $\theta_{mech}(t)$ des Rotors 21 bestimmt werden. $\theta_{mech}(t)$ kann in weiterer Folge beispielsweise bei der Regelung der Drehstrommaschine 3 herangezogen werden. Zum Beispiel können mit Hilfe von $\theta_{mech}(t)$ elektrische Größen in einem rotorbezogenen Koordinatensystem dargestellt werden oder die Winkellage (Winkellagenregelung) und/oder die Drehzahl (Drehzahlregelung) des Rotors geregelt werden.

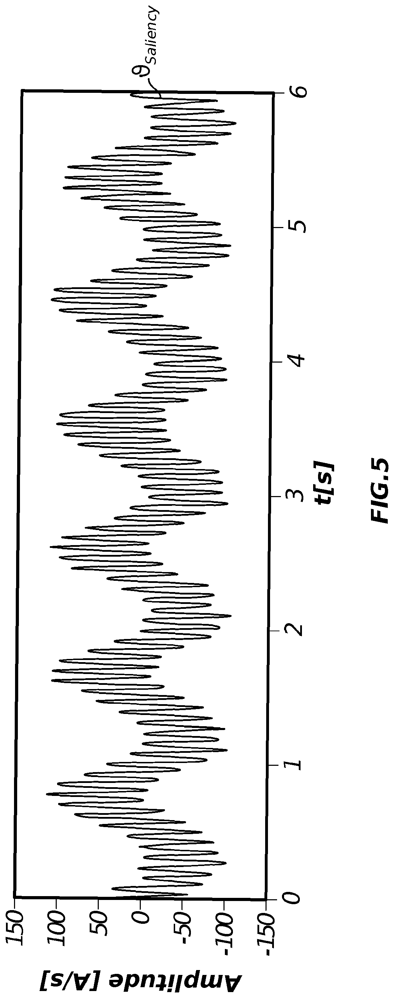

Fig. 5 zeigt einen Zeitverlauf der Realkomponente des verknüpften Stromsignals $\vartheta_{Saliency}$ in Sekunden. Dieses Signal enthält den Nutungssignalanteil $\vartheta_{slot}$, den Sättigungssignalanteil $\vartheta_{sat}$ und den Intermodulationssignalanteil $\vartheta_{inter}$.

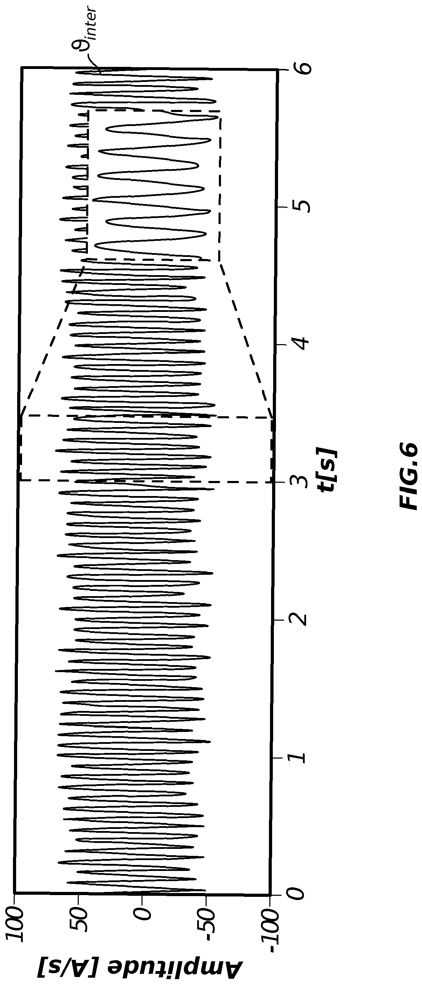

Fig. 6 zeigt einen Zeitverlauf des Realteils des Intermodulationssignalanteils $\vartheta_{inter}$, in Sekunden, wobei der Nutungssignalanteil $\vartheta_{slot}$ und der Sättigungssignalanteil $\vartheta_{sat}$ eliminiert wurden. Das dargestellte Signal enthält allerdings noch eigene und Oberwellen anderer Signalanteile.

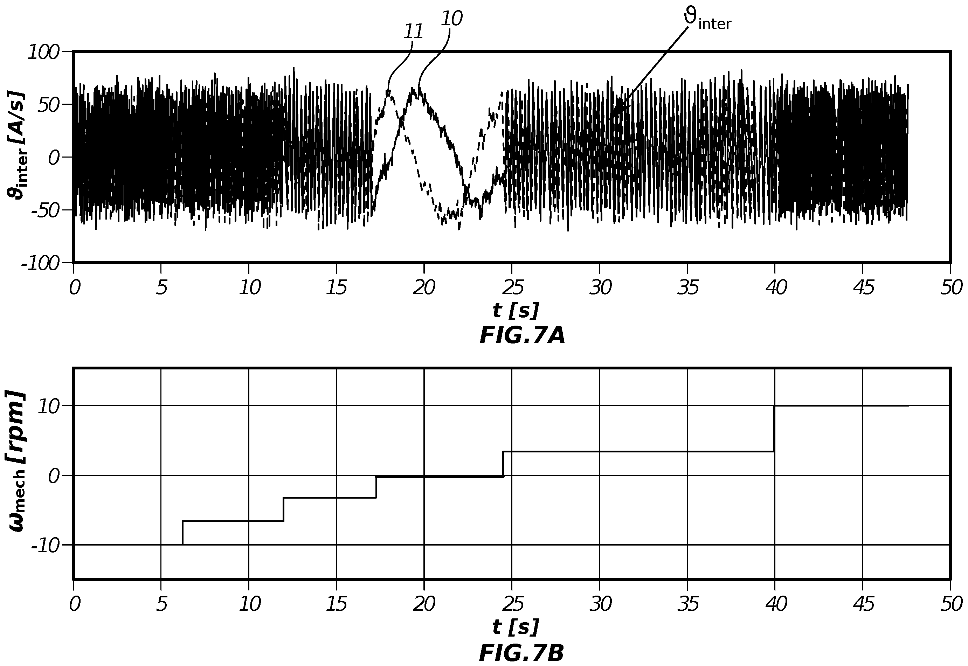

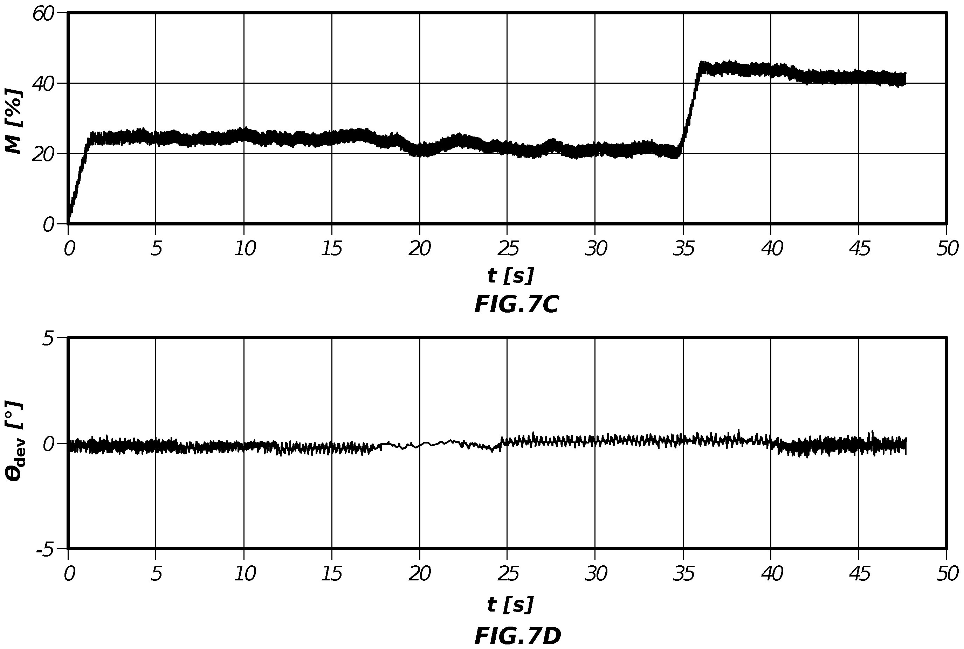

Fig. 7A-D zeigen Signalverläufe bei unterschiedlichen Betriebszuständen der Asynchronmaschine 2 zu unterschiedlichen Zeitpunkten. Auf der Abszisse der Figuren 7A-D ist bei allen Figuren Fig. 7A-D die Zeit t in Sekunden aufgetragen. In Fig. 7A ist der Realteil 10 und der Imaginärteil 11 des Intermodulationssignalanteils $\vartheta_{inter}$ dargestellt. In Fig. 7B ist die mechanische Drehzahl $\omega_{mech}$ des Rotors 21 in Umdrehungen pro Minute (engl. rpm) über der Zeit dargestellt. In Fig. 7C ist das von der Drehstrommaschine 3 erzeugte Drehmoment bezogen auf ein Nenndrehmoment über der Zeit dargestellt. In Fig. 7D ist eine Winkelabweichung $\theta_{dev}$ zwischen der mit Hilfe des erfindungsgemäßen Verfahrens bestimmten mechanische Winkellage $\theta_{mech}(t)$ des Rotors und einer mit Hilfe eines Drehgebers bestimmten mechanischen Winkellage in Grad dargestellt. In Fig. 7D ist erkennbar, dass mit Hilfe des erfindungsgemäßen Verfahrens

mechanische Winkellagen $\theta_{mech}(t)$ des Rotors bestimmt werden können, die eine Abweichung zur tatsächlichen (gemessenen) mechanischen Winkellage von unter 1° aufweisen.

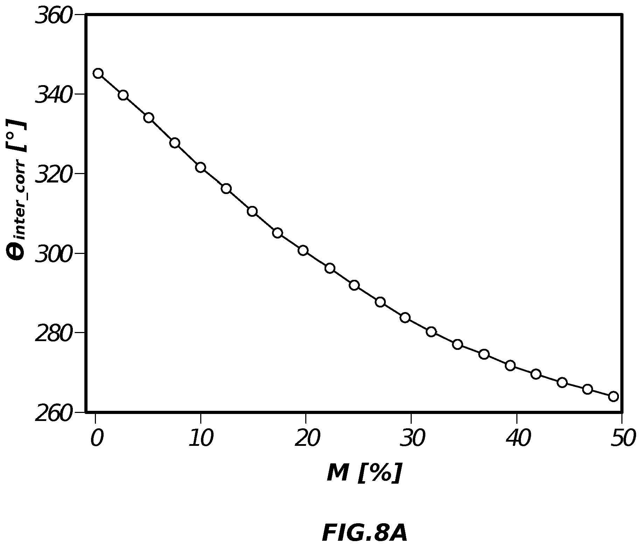

Bei Versuchen hat sich herausgestellt, dass die Genauigkeit des erfindungsgemäßen Verfahrens weiter erhöht werden kann, indem Abhängigkeiten des Winkels $\theta_{inter}(t)$ des Intermodulationssignalanteils $\vartheta_{inter}$ und des Winkels $\theta_{sat}(t)$ des Sättigungssignalanteils $\vartheta_{sat}$ von der Drehzahl und/oder Belastung der Drehstrommaschine 3 berücksichtigt werden. Es hat sich gezeigt, dass der Winkel $\theta_{in-ter}(t)$ des Intermodulationssignalanteils $\vartheta_{inter}$ und der Winkel $\theta_{sat}(t)$ des Sättigungssignalanteils $\vartheta_{sat}$ Abweichungen in Abhängigkeit von der Belastung, insbesondere des Drehmoments M der Drehstrommaschine 3, aufweisen können. In einer Ausführungsform kann daher vorgesehen sein, dass der Winkel $\theta_{inter}(t)$ des Intermodulationssignalanteils $\vartheta_{inter}$ in Abhängigkeit der Belastung der Drehstrommaschine 3, insbesondere des Drehmoments M, mit Hilfe eines Intermodulations-Korrekturwerts $\theta_{inter\_corr}$ korrigiert wird. Die Abhängigkeit von $\theta_{inter\_corr}$ vom Drehmoment M (in % bezogen auf das Nenndrehmoment) der Drehstrommaschine 3 ist in Fig. 8A dargestellt.

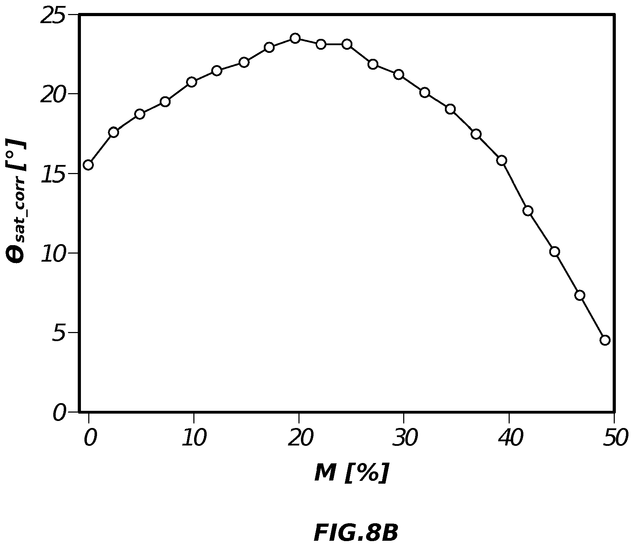

Weiters kann auch vorgesehen sein, dass der Winkel $\theta_{sat}(t)$ des Sättigungssignalanteils $\vartheta_{sat}$ in Abhängigkeit der Belastung und der Drehzahl der Drehstrommaschine 3, insbesondere des Drehmoments M, mit Hilfe eines Sättigungs-Korrekturwerts $\theta_{sat\_corr}$ korrigiert wird. Die Abhängigkeit von $\theta_{sat\_corr}$ vom Drehmoment M (in % bezogen auf das Nenndrehmoment) der Drehstrommaschine 3 ist in Fig. 8B dargestellt.

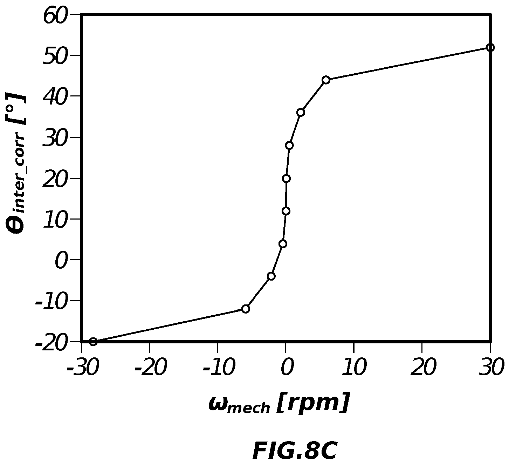

Der Winkel $\theta_{inter}$ des Intermodulationssignalanteils $\vartheta_{inter}$ kann auch eine Abhängigkeit von der Drehzahl der Drehstrommaschine 3 aufweisen (siehe Fig. 8C). Diese Abhängigkeit kann ebenfalls mit Hilfe des Intermodulations-Korrekturwerts $\theta_{inter\_corr}$, zusätzlich oder alternativ zur Drehmomentabhängigkeit, berücksichtigt werden.

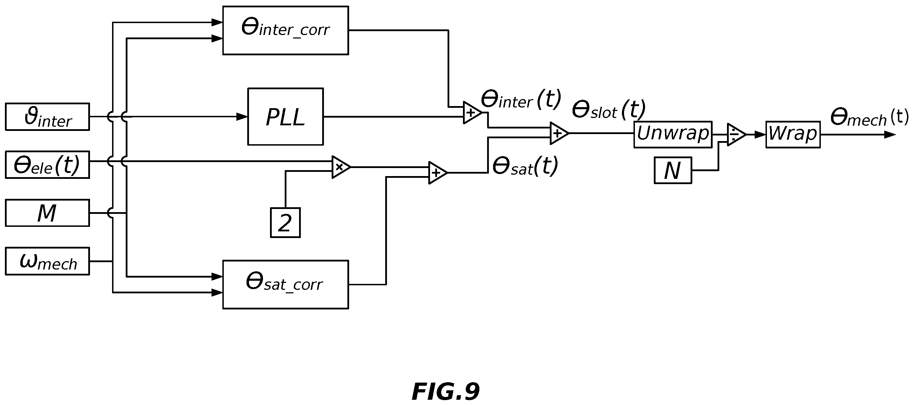

Fig. 9 zeigt schematisch eine mögliche Realisierung des erfindungsgemäßen Verfahrens. Als Eingangsgrößen werden in dem gezeigten Ausführungsbeispiel der Intermodulationssignalanteil $\vartheta_{in-ter}$, ein elektrischer Winkel $\theta_{ele}(t)$, ein Drehmoment M und eine mechanische Winkelgeschwindigkeit $\omega_{mech}$ verwendet. $\theta_{ele}(t)$ stellt den Winkel der Grundwelle des Statorstroms dar und kann aus den gemessenen Strangströmen $I_U$, $I_V$, $I_W$, beispielsweise als Raumzeiger, bestimmt werden. $\omega_{mech}$ kann aus dem Intermodulationssignalanteil $\vartheta_{inter}$ bestimmt werden. Durch Multiplikation des elektrischen Winkels $\theta_{ele}(t)$, vorzugsweise mit einem Faktor 2, kann der Winkel $\theta_{sat}(t)$ des Sättigungssignalanteils $\vartheta_{sat}$ erhalten werden, der mittels eines zuvor bestimmten Sättigungs-Korrekturwerts $\theta_{sat\_corr}$ korrigiert werden kann. Mit Hilfe einer Phase-Locked-Loop Signalverarbeitungseinheit (PLL) kann aus dem Intermodulationssignalanteil $\vartheta_{inter}$ der Winkel $\theta_{inter}(t)$ des Intermodulationssignalanteils $\vartheta_{inter}$ erhalten und mittels eines Intermodulations-Korrekturwerts $\theta_{inter\_corr}$ korrigiert werden. Durch Kombination der beiden Winkel $\theta_{inter}(t)$ und $\theta_{sat}(t)$, insbesondere unter Zuhilfenahme der Gleichung (5), kann ein Nutungswinkel $\theta_{slot}(t)$ errechnet werden. Der Nutungswinkel $\theta_{slot}(t)$ wird in einem UNWRAP-Block zu einem zusammenhängenden Winkelverlauf (engl. "unwrapped phase") berechnet und anschließend durch die Anzahl an Nuten N des Rotors dividiert, um eine mechanische Winkellage $\theta_{mech}(t)$ des Rotors zu erhalten. Die mechanische Winkellage kann anschließend in einem WRAP-Block wieder umgerechnet werden, sodass $\theta_{mech}(t)$ in einem Winkelintervall, insbesondere zwischen [-180°;180°] bzw. [0°;360°], dargestellt wird (engl. "wrapped phase"). $\theta_{mech}(t)$ kann anschließend zur Regelung der Drehstrommaschine 3 herangezogen werden.

**Patentansprüche**

1. Verfahren zur Regelung einer elektrischen Drehstrommaschine (3), insbesondere einer Asynchronmaschine (2), mit einem Rotor (21), einem Stator (20) und zumindest zwei Strängen (U,V,W), wobei zumindest ein elektrisches Signal, insbesondere ein Spannungssignal ($U_{U,V,W}(t)$), an zumindest einem Strang (U,V,W), vorzugsweise allen Strängen (U,V,W), der Drehstrommaschine (3) aufgeschaltet wird und ein elektrischer Signalverlauf, insbesondere ein Stromverlauf ($i_{U,V,W}(t)$), in dem zumindest einen Strang (U,V,W) gemessen oder ermittelt wird, wobei ein durch Nutungseffekte und magnetische Sättigungseffekte in der Drehstrommaschine hervorgerufener Intermodulationssignalanteil ($\vartheta_{inter}$), der aus dem in dem zumindest einen Strang (U,V,W) gemessenen oder ermittelten Signalverlauf ermittelt wird, zur Regelung der Drehstrommaschine (1) verwendet wird, wobei der Intermodulationssignalanteil ($\vartheta_{inter}$) durch Eliminierung von anderen Signalanteilen extrahiert wird, **dadurch gekennzeichnet, dass** aus einem Winkel ($\theta_{in-ter}(t)$) des Intermodulationssignalanteils ($\vartheta_{inter}$) ein Nutungswinkel ($\theta_{slot}(t)$) ermittelt wird, indem der Winkel ($\theta_{inter}(t)$) des Intermodulationssignalanteils ($\vartheta_{inter}$) mit einem Winkel ($\theta_{sat}(t)$) eines im zumindest einen Signalverlauf enthaltenen Sättigungssignalanteils ($\vartheta_{sat}$) durch die Berechnungsvorschrift

$$\theta_{slot}(t) = \pm\theta_{sat}(t) - \theta_{inter}(t)$$

kombiniert wird, wobei es sich bei dem Nutungswinkel ($\theta_{slot}(t)$), dem Winkel ($\theta_{inter}(t)$) des Intermodulationssignalanteils ($\vartheta_{inter}$) und dem Winkel ($\theta_{sat}(t)$) des Sättigungssignalanteils ($\vartheta_{sat}$) um Phasenwinkel handelt.

2. Verfahren nach Anspruch 1, **dadurch gekennzeichnet, dass** aus dem Intermodulationssignalanteil ($\vartheta_{inter}$) eine mechanische Winkellage ($\theta_{mech}(t)$) und/oder eine Drehzahl des Rotors ermittelt wird und die Winkellage ($\theta_{mech}(t)$) und/oder die Drehzahl zur Regelung der Drehstrommaschine (3) verwendet wird.

3. Verfahren nach Anspruch 1 oder 2, **dadurch gekennzeichnet, dass** der Intermodulationssignalanteil ($\vartheta_{inter}$) aus einer zeitlichen Änderung des zumindest einen Signalverlaufs, insbesondere Stromverlaufs ($i_{U,V,W}(t)$), ermittelt wird.

4. Verfahren nach einem der Ansprüche 1 bis 3, **dadurch gekennzeichnet, dass** in zumindest zwei Strängen (U,V,W), insbesondere in drei Strängen (U,V,W), der Drehstrommaschine (3) Stromverläufe ($i_{U,V,W}(t)$), insbesondere deren zeitliche Änderungen ($di_{U,V,W}(t)/dt$), ermittelt werden und die Stromverläufe ($i_{U,V,W}(t)$), vorzugsweise deren zeitliche Änderungen ($di_{U,V,W}(t)/dt$), durch eine mathematische Gleichung zu einem verknüpften Signal ($\vartheta_{Sa-liency}$) verknüpft werden und der Intermodulationssignalanteil ($\vartheta_{in-ter}$) aus dem verknüpften Signal ($\vartheta_{Saliency}$) ermittelt wird.

5. Verfahren nach Anspruch 4, **dadurch gekennzeichnet, dass** die mathematische Gleichung eine Gleichung zur Berechnung eines Tensors, insbesondere eines Raumzeigers, ist.

6. Verfahren nach einem der Ansprüche 1 bis 5, **dadurch gekennzeichnet, dass** der Intermodulationssignalanteil ($\vartheta_{inter}$) durch Eliminierung von Sättigungssignalanteilen ($\vartheta_{sat}$) auf Grund von magnetischen Sättigungseffekten in der Drehstrommaschine (3) und/oder Nutungssignalanteilen ($\vartheta_{slot}$) auf Grund von Nutungseffekten extrahiert wird.

7. Verfahren nach einem der Ansprüche 1 bis 6, **dadurch gekennzeichnet, dass** durch Division des Nutungswinkels ($\theta_{slot}(t)$) durch eine Anzahl an Nuten des Rotors eine mechanische Winkellage ($\theta_{mech}(t)$) des Rotors bestimmt wird.

8. Verfahren nach einem der Ansprüche 1 bis 7, **dadurch gekennzeichnet, dass** der Winkel ($\theta_{inter}(t)$) des Intermodulationssignalanteils ($\vartheta_{inter}$) in Abhängigkeit der Drehzahl des Rotors (21) und/oder der Belastung der Drehstrommaschine (3), insbesondere des Drehmoments (M), mit Hilfe eines Intermodulations-Korrekturwerts ($\theta_{inter\_corr}$) korrigiert wird.

9. Verfahren nach einem der Ansprüche 1 bis 8, **dadurch gekennzeichnet, dass** der Winkel ($\theta_{sat}(t)$) des Sättigungssignalanteils ($\vartheta_{sat}$) in Abhängigkeit einer Drehzahl des Rotors und/oder der Belastung der Drehstrommaschine (3), insbesondere des Drehmoments (M), mit Hilfe eines Sättigungs-Korrekturwerts ($\theta_{sat\_corr}$) korrigiert wird.

10. Verfahren nach einem der Ansprüche 1 bis 9, **dadurch gekennzeichnet, dass** das elektrische Signal ein Anregungssignal (9) aufweist, das im Wesentlichen unabhängig von der Erzeugung einer Grundwelle der Drehstrommaschine (3) ist und dessen zeitliche Grundfrequenz vorzugsweise zumindest das Fünffache, noch mehr bevorzugt zumindest das Zehnfache der zeitlichen Frequenz der Grundwellen der Spannungen in einem Strang (U,V,W) zur Erzeugung der Grundwelle der Drehstrommaschine (3) beträgt.

11. Verfahren nach einem der Ansprüche 1 bis 10, **dadurch gekennzeichnet, dass** das elektrische Signal ein Stromsignal ist und zur Bestimmung des Intermodulationssignalanteils ($\vartheta_{inter}$) die Antwort der Drehstrommaschine (3) auf das Stromsignal ausgewertet wird.

12. Drehstrommaschinensystem (1), aufweisend:

    - eine Drehstrommaschine (3), insbesondere eine Asynchronmaschine (2), mit einem Rotor, einem Stator und zumindest zwei Strängen (U,V,W);
    - einen Umrichter (4), der mit der Drehstrommaschine (3) elektrisch verbunden ist, wobei der Umrichter (4) dazu eingerichtet ist, elektrische Signale, insbesondere Spannungssignale ($U_{U,V,W}$), an zumindest einem Strang (U,V,W), vorzugsweise allen Strängen (U,V,W), der Drehstrommaschine (3) aufzuschalten;
    - zumindest eine Messvorrichtung (8a, 8b), die dazu eingerichtet ist, zumindest einen elektrischen Signalverlauf, insbesondere einen Stromverlauf ($i_{U,V,W}(t)$), in dem zumindest einen Strang (U,V,W) zu messen oder zu ermitteln,
    - eine Regelungseinheit (12), die dazu eingerichtet ist, die Drehstrommaschine (3) auf Basis eines durch Nutungseffekte und magnetische Sättigungseffekte in der Drehstrommaschine (3) hervorgerufenen Intermodulationssignalanteils ($\vartheta_{inter}$) zu regeln, welcher Intermodulationssignalanteil ($\vartheta_{inter}$) in dem zumindest einen gemessenen Signalverlauf enthalten ist, wobei die Regelungseinheit (12) weiter dazu eingerichtet ist, den Intermodulationssignalanteil ($\vartheta_{inter}$) durch Eliminierung von anderen Signalanteilen zu extrahieren,

**dadurch gekennzeichnet, dass** die Regelungseinheit (12) dazu eingerichtet ist, aus einem Winkel ($\theta_{inter}$(t)) des Intermodulationssignalanteils ($\vartheta_{inter}$) einen Nutungswinkel ($\theta_{slot}$(t)) zu ermitteln, indem der Winkel ($\theta_{inter}$(t)) des Intermodulationssignalanteils ($\vartheta_{inter}$) mit einem Winkel ($\theta_{sat}$(t)) eines im zumindest einen Signalverlauf enthaltenen Sättigungssignalanteils ($\vartheta_{sat}$) durch die Berechnungsvorschrift

$$\theta_{slot}(t) = \pm\theta_{sat}(t) - \theta_{inter}(t)$$

kombiniert wird, wobei es sich bei dem Nutungswinkel ($\theta_{slot}$(t)), dem Winkel ($\theta_{inter}$(t)) des Intermodulationssignalanteils ($\vartheta_{inter}$) und dem Winkel ($\theta_{sat}$(t)) des Sättigungssignalanteils ($\vartheta_{sat}$) um Phasenwinkel handelt.

13. Drehstrommaschinensystem (1) nach Anspruch 12, **dadurch gekennzeichnet, dass** die Regelungseinheit (12) in dem Umrichter (4) integriert ist.

## Claims

1. Method for controlling an electric rotary current machine (3), in particular an induction machine (2), with a rotor (21), a stator (20) and at least two phase windings (U,V,W), wherein at least one electrical signal, in particular a voltage signal ($U_{U,V,W}$(t)), is applied to at least one phase winding (U,V,W), preferably all phase windings (U,V,W), of the rotary current machine (3) and an electrical signal waveform, in particular a current waveform ($i_{U,V,W}$(t)) in the at least one phase winding (U,V,W), is measured or determined, whereby an intermodulation signal induced in the rotary current machine by slotting effecs and magnetic saturation effects which is measured or determined from the at least one phase winding (U,V,W) is used to control the rotary current machine (1), whereby the intermodulation signal component ($\vartheta_{inter}$) is extracted by elimination of other signal components, **characterized in that** a slotting angle ($\theta_{slot}$(t)) is determined from an angle ($\theta_{inter}$(t)) of the intermodulation signal component ($\vartheta_{inter}$) by combining the angle ($\theta_{inter}$(t)) of the intermodulation signal component ($\vartheta_{inter}$) with an angle ($\theta_{sat}$(t)) of a saturation signal component ($\vartheta_{sat}$) contained in at least one signal waveform, using the calculation rule

$$\theta_{slot}(t) = \pm\theta_{sat}(t) - \theta_{inter}(t) \quad,$$

whereby the slotting angle ($\theta_{slot}$(t)), the angle ($\theta_{inter}$(t)) and the angle ($\theta_{sat}$(t)) of the saturation signal component ($\vartheta_{sat}$) represent phase angles.

2. Method according to Claim 1, **characterized in that** a mechanical angular position ($\theta_{mech}$(t)) and/or a rotation speed of the rotor is determined from the intermodulation signal component ($\vartheta_{inter}$) and the angular position ($\theta_{mech}$(t)) and/or the rotation speed is used to control the rotary current machine (3).

3. Method according to Claim 1 or 2, **characterized in that** the intermodulation signal component ($\vartheta_{inter}$) is determined from a rate of change of the at least one signal waveform, in particular the current waveform ($i_{U,V,W}$(t)).

4. Method according to any one of Claims 1 to 3, **characterized in that** in at least two phase windings (U,V,W), in particular in three phase windings (U,V,W), of the rotary current machine (3), current waveforms ($i_{U,V,W}$(t)), in particular their rates of change ($di_{U,V,W}$(t)/dt), are determined and the current waveforms ($i_{U,V,W}$,(t)), in particular their rates of change ($di_{U,V,W}$(t)/dt), are combined by means of a mathematical equation to form a combined signal ($\vartheta_{Saliency}$) and the intermodulation signal component ($\vartheta_{inter}$) is determined from the combined signal ($\vartheta_{Saliency}$).

5. Method according to Claim 4, **characterized in that** the mathematical equation is an equation for calculating a tensor, in particular a space vector.

6. Method according to any one of Claims 1 to 5, **characterized in that** the intermodulation signal component ($\vartheta_{inter}$) is extracted by elimination of saturation signal components ($\vartheta_{sat}$) due to magnetic saturation effects in the rotary current machine (3) and/or slot signal components ($\vartheta_{slot}$) due to slotting effects.

7. Method according to Claims 1 to 6, **characterized in that** a mechanical angular position ($\theta_{mech}$(t)) of the rotor is determined by dividing the slotting angle ($\theta_{slot}$(t)) by the number of slots of the rotor.

8. Method according to Claims 1 to 7, **characterized in that** the angle ($\theta_{inter}$(t)) of the intermodulation signal component ($\vartheta_{inter}$) is corrected by means of an intermodulation correction value ($\theta_{inter\_corr}$) as a function of the rotation speed of the rotor (21) and/or the load on the rotary current machine (3), in particular the torque (M).

9. Method according to any one of Claims 1 to 8, **characterized in that** the angle ($\theta_{sat}$(t)) of the saturation signal component ($\vartheta_{sat}$) is corrected by means of a saturation correction value ($\theta_{sat\_corr}$) as a function of the rotation speed of the rotor and/or the loading on the rotary current machine (3), in particular the torque (M).

10. Method according to any one of Claims 1 to 9, **characterized in that** the electrical signal comprises an excitation signal (9), which is essentially independent of the generation of a fundamental wave of the rotary current machine (3) and the fundamental frequency of which is preferably at least five times as great, even more preferably at least ten times as great, as the temporal frequency of the fundamental wave of the voltages in a phase winding (U,V,W) for generating the fundamental wave of the rotary current machine (3).

11. Method according to any one of Claims 1 to 10, **characterized in that** the electrical signal is a current signal and the response of the rotary current machine (3) to the current signal is evaluated to determine the intermodulation signal component ($\vartheta_{inter}$) .

12. Rotary current machine system (1), comprising:

   - a rotary current machine (3), in particular an induction machine (2), having a rotor, a stator and at least two phase windings (U,V,W);
   - a converter (4) which is electrically connected to the rotary current machine (3), wherein the converter (4) is configured to apply electrical signals, in particular voltage signals ($U_{U,V,W}$), to at least one phase winding (U,V,W), preferably all phase windings (U,V,W), of the rotary current machine (3);
   - at least one measuring device (8a, 8b) which is configured to measure or determine at least one electrical signal waveform, in particular a current waveform ($i_{U,V,W}$(t)) in the at least one phase winding (U,V,W),
   - a control unit (12) that is configured to control the rotary current machine (3) on the basis of an intermodulation signal component ($\vartheta_{inter}$) caused by slotting effects and magnetic saturation effects in the rotary current machine (3), which intermodulation signal component ($\vartheta_{inter}$) is contained in the at least one measured signal waveform, the control unit (12) further being configured to extract the intermodulation signal component ($\vartheta_{inter}$) by elimination of other signal components, **characterized in that** the control unit (12) is configured to determine from an angle ($\theta_{inter}$(t)) of the intermodulation signal component ($\vartheta_{inter}$) a slotting angle ($\theta_{slot}$(t)) by combining the angle ($\theta_{inter}$(t)) of the intermodulation signal component ($\vartheta_{inter}$) with an angle ($\theta_{sat}$(t)) of a saturation signal component ($\vartheta_{sat}$) contained in at least one signal waveform, using the calculation rule

$$\theta_{slot}(t) = \pm\theta_{sat}(t) - \theta_{inter}(t) \quad ,$$

   whereby the slotting angle ($\theta_{slot}$(t)), the angle ($\theta_{inter}$(t)) and the angle ($\theta_{sat}$(t)) of the saturation signal component ($\vartheta_{sat}$) represent phase angles.

13. Rotary current machine system (1) according to Claim 12,
   **characterized in that** the control unit (12) is integrated into the converter (4).

**Revendications**

1. Procédé de régulation d'une machine électrique à courant triphasé (3), plus particulièrement d'une machine asynchrone (2), avec un rotor (21), un stator (20) et au moins deux branches (U, V, W), dans lequel au moins un signal électrique, plus particulièrement un signal de tension ($U_{U,V,W}$(t)), est appliqué à au moins une branche (U, V, W), de préférence à toutes les branches (U, V, W), de la machine à courant triphasé (3), et un tracé de signal électrique, plus particulièrement un tracé de courant ($i_{U, V, W}$(t)) dans l'au moins une branche (U, V, W) est mesuré ou déterminé, dans lequel une composante de signal d'intermodulation ($\vartheta_{inter}$), générée par des effets de rainurage et des effets de saturation magnétique dans la machine à courant triphasé, qui est déterminée à partir du tracé de signal mesuré ou déterminé dans l'au moins une branche (U, V, W), est utilisée pour la régulation de la machine à courant triphasé (1), dans lequel la composante de signal d'intermodulation ($\vartheta_{inter}$) est extraite par élimination d'autres composantes de signaux, **caractérisé en ce que**, à partir d'un angle ($\theta_{inter}$(t)) de la composante de signal d'intermodulation ($\vartheta_{inter}$), est

déterminé un angle de rainurage ($\theta_{slot}$(t)), grâce au fait que l'angle ($\theta_{inter}$(t)) de la composante de signal d'intermodulation ($\vartheta_{inter}$) est combiné avec un angle ($\theta_{sat}$(t)) d'une composante de saturation ($\vartheta_{sat}$) contenue dans l'au moins un tracé de signal est combiné à l'aide de la consigne de calcul suivante :

$$\theta_{slot}(t) = \pm\, \theta_{sat}(t) - \theta_{inter}(t)$$

dans lequel l'angle de rainurage ($\theta_{slot}$(t)), l'angle ($\theta_{inter}$(t)) de la composante de signal d'intermodulation ($\vartheta_{inter}$) et l'angle ($\theta_{sat}$(t)) de la composante de saturation ($\vartheta_{sat}$) sont des angles de phase.

**2.** Procédé selon la revendication 1, **caractérisé en ce que**, à partir de la composante de signal d'intermodulation ($\vartheta_{inter}$), est déterminée une position angulaire mécanique ($\theta_{mech}$(t)) et/ou une vitesse de rotation du rotor et la position angulaire ($\theta_{mech}$(t)) et/ou la vitesse de rotation est utilisée pour la régulation de la machine à courant triphasé (3).

**3.** Procédé selon la revendication 1 ou 2, **caractérisé en ce que** la composante de signal d'intermodulation ($\vartheta_{inter}$) est déterminée à partir d'une variation en fonction du temps de l'au moins un tracé de signal, plus particulièrement le tracé de courant ($i_{U,\,V,\,W}$(t)).

**4.** Procédé selon l'une des revendications 1 à 3, **caractérisé en ce que**, dans au moins deux branches (U, V, W), plus particulièrement dans trois branches (U, V, W), de la machine à courant triphasé (3), les tracés de courant ($i_{U,V,\,W}$(t)), plus particulièrement leurs variations en fonction du temps ($di_{U,\,V,\,W}$(t)/dt), sont déterminés et les tracés de courant ($i_{U,V,\,W}$(t)), de préférence leurs variations en fonction du temps ($di_{U,\,V,\,W}$(t)/dt), sont combinées à l'aide d'une équation mathématique en un signal combiné ($\vartheta_{Saliency}$) et la composante de signal d'intermodulation ($\vartheta_{inter}$) est déterminée à partir du signal combiné ($\vartheta_{Saliency}$).

**5.** Procédé selon la revendication 4, **caractérisé en ce que** l'équation mathématique est une équation pour le calcul d'un tenseur, plus particulièrement d'un vecteur dimensionnel.

**6.** Procédé selon l'une des revendications 1 à 5, **caractérisé en ce que** la composante de signal d'intermodulation ($\vartheta_{inter}$) est extraite par élimination des composantes de signal de saturation ($\vartheta_{sat}$) sur la base d'effets de saturation magnétique dans la machine à courant triphasé (3) et/ou des composants de signal de rainurage ($\vartheta_{slot}$) sur la base d'effets de rainurage.

**7.** Procédé selon l'une des revendications 1 à 6, **caractérisé en ce que**, par la division de l'angle de rainurage ($\theta_{slot}$(t)) par un nombre de rainures du rotor, une position angulaire mécanique ($\theta_{mech}$(t)) du rotor est déterminée.

**8.** Procédé selon l'une des revendications 1 à 7, **caractérisé en ce que** l'angle ($\theta_{inter}$(t)) de la composante de signal d'intermodulation ($\vartheta_{inter}$) est corrigé en fonction de la vitesse de rotation du rotor (21) et/ou de la sollicitation de la machine à courant triphasé (3), plus particulièrement du couple de rotation (M), à l'aide d'une valeur de correction d'intermodulation ($\theta_{inter\_corr}$).

**9.** Procédé selon l'une des revendications 1 à 8, **caractérisé en ce que** l'angle ($\theta_{isat}$(t)) de la composante de signal de saturation ($\vartheta_{sat}$) est corrigé en fonction d'une vitesse de rotation du rotor et/ou de la sollicitation de la machine à courant triphasé (3), plus particulièrement du couple de rotation (M), à l'aide d'une valeur de correction de saturation ($\theta_{sat\_corr}$).

**10.** Procédé selon l'une des revendications 1 à 9, **caractérisé en ce que** le signal électrique comprend un signal d'excitation (9) qui est globalement indépendant de la production d'une onde de base de la machine à courant triphasé (3) et dont la fréquence de base temporelle représente de préférence au moins cinq fois, encore plus de préférence au moins dix fois la fréquence temporelle des ondes de base des tensions dans une branche (U, V, W) pour la production de l'onde de base de la machine à courant triphasé (3).

**11.** Procédé selon l'une des revendications 1 à 10, **caractérisé en ce que** le signal électrique est un signal de courant et, pour la détermination de la composante de signal d'intermodulation ($\vartheta_{inter}$), la réponse de la machine à courant triphasé (3) au signal de courant est analysée.

**12.** Système de machine à courant triphasé (1) comprenant :

- une machine à courant triphasé (3), plus particulièrement une machine asynchrone (2), avec un rotor, un stator et au moins deux branches (U, V, W) ;
- un convertisseur (4), qui est relié électriquement avec la machine à courant triphasé (3), dans lequel le convertisseur (4) est conçu pour appliquer des signaux électriques, plus particulièrement des signaux de tension ($U_{U, V, W}$) à au moins une branche (U, V, W), de préférence à toutes les branches (U, V, W), de la machine à courant triphasé (3) ;
- au moins un dispositif de mesure (8a, 8b) qui est conçu pour mesurer ou déterminer au moins un tracé de signal électrique, plus particulièrement un tracé de courant ($i_{U,V, W}(t)$), dans l'au moins une branche (U, V, W) ;
- une unité de régulation (12), qui est conçue pour réguler la machine à courant triphasé (3) sur la base d'une composante de signal d'intermodulation ($\vartheta_{inter}$) générée par des effets de rainurage et des effets de saturation magnétique dans la machine à courant triphasé (3), cette composante de signal d'intermodulation ($\vartheta_{inter}$) étant contenue dans l'au moins un tracé de signal mesuré, dans lequel l'unité de régulation (12) est en outre conçue pour extraire la composante de signal d'intermodulation ($\vartheta_{inter}$) d'autres composantes du signal,

**caractérisé en ce que** l'unité de régulation (12) est conçue pour déterminer, à partir d'un angle ($\theta_{inter}(t)$) de la composante de signal d'intermodulation ($\vartheta_{inter}$), un angle de rainurage ($\theta_{slot}(t)$), grâce au fait que l'angle ($\theta_{inter}(t)$) de la composante de signal d'intermodulation ($\vartheta_{inter}$) est combiné avec un angle ($\theta_{sat}(t)$) d'une composante de saturation ($\vartheta_{sat}$) contenue dans l'au moins un tracé de signal, à l'aide de la consigne de calcul suivante :

$$\theta_{slot}(t) = \pm\, \theta_{sat}(t) - \theta_{inter}(t)$$

dans lequel l'angle de rainurage ($\theta_{slot}(t)$), l'angle ($\theta_{inter}(t)$) de la composante de signal d'intermodulation ($\vartheta_{inter}$) et l'angle ($\theta_{sat}(t)$) de la composante de signal de saturation ($\vartheta_{sat}$) sont des angles de phase.

13. Système de machine à courant triphasé (1) selon la revendication 12, **caractérisé en ce que** l'unité de régulation (12) est intégrée dans le convertisseur (4).

**FIG.1**

EP 3 930 178 B1

**FIG.2**

EP 3 930 178 B1

**FIG.3A**

9

t[µs]

**FIG.3B**

$i_U(t)$

$I_U[A]$

t[µs]

FIG.4A

FIG.4B

**FIG.5**

**FIG.6**

FIG.7A

FIG.7B

EP 3 930 178 B1

FIG.7C

FIG.7D

*FIG.8A*

**FIG.8B**

**FIG.8C**

FIG.9

**FIG.10C**

**FIG.10B**

**FIG.10A**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9939430 A1

**In der Beschreibung aufgeführte Nicht-Patentliteratur**

- Comparison of inherent saliency tracking methods for zero speed sensorless control of standard induction machines. **WOLBANK T.M. et al.** ELECTRIC MACHINES AND DRIVES CONFERENCE, 2009. IEMDC , 09. IEEE INTERNATIONAL. IEEE, 03 May 2009, 1258-1263
- **METWALY MOHAMED K. et al.** Slotting Saliency Extraction For Sensorless Torque Control of Standard Induction Machines. *IEEE TRANSACTIONS ON ENERGY CONVERSION, IEEE_ SERVICE CENTER, PISCATAWAY, NJ, US*, 01 March 2018, vol. 33 (1), 68-77
- **VON W. FAHRNER** ; **M.A. VOGELSBERGER** ; **T. WOLBANK**. *Identification and Compensation of High-order Harmonic Distortions in Saliency Based Sensorless Control of Induction Machines*
- **BROWN, IAN PATERSON** ; **ROBERT D. LORENZ**. *Induction Machine Design Methodology for Self-Sensing: Balancing Saliencies and Power Conversion Properties*